# EUROPEAN PATENT APPLICATION

(11) **EP 3 875 347 A1**
(43) Date of publication of application: **08.09.2021**
(21) Application number: 19880862.8
(22) Date of filing: 27.08.2019
(51) Int. Cl.: B62D 1/28, A01B 69/00, B62D 11/02

(54) **TRAVELING VEHICLE**

(30) Priority: 29.10.2018 JP 2018202651
(71) Applicant: Yanmar Power Technology Co., Ltd., Osaka-shi Osaka 530-0013 (JP)
(72) Inventor: AOKI Hideaki, Osaka-shi, Osaka 530-0013 (JP)
(74) Representative: Dennemeyer & Associates S.A.
(86) International application number: PCT/JP2019/033446
(87) International publication number: WO 2020/090207

(57) **Abstract**

Provided is a traveling vehicle which is configured to be manually operable and to be capable of being prevented from collision, and which can be assembled more easily. This traveling vehicle is provided with a traveling vehicle body (1) on which a first control unit (5) for controlling traveling is mounted, and an operation unit (2) which enables the manual operation of the traveling vehicle body (1). The operation unit (2) is provided with a housing (20) having a connection section (20D) removably connected to the traveling vehicle body (1). The housing (20) is integral with manual operation sections (22-25) enabling an input of instructive information for traveling into the first control unit (5), and also with an obstacle sensor (26) for detecting an obstacle present in the direction of movement of the vehicle body and transmitting the result of detection to the first control unit (5).

## Description

### TECHNICAL FIELD

The present invention relates to a traveling vehicle that can be utilized for transporting goods, planting seedlings or harvesting crops by hand work, etc.

### BACKGROUND ART

As such a traveling vehicle as described above, there is a haulage vehicle or the like equipped with a handle that is swingable back and forth on the front-surface side of the vehicle body, which is equipped with a drive motor for driving wheels, and a contact-type obstacle sensor (belt switch) and a non-contact-type obstacle sensor on the bumper of the rear-surface side of the traveling vehicle, so as to have a configuration in which, if a forward or backward swing-operation is performed with the handle, the drive motor drives the wheels according to the operation in order to cause the traveling vehicle to travel forward or travel backward and, if any of the obstacle sensors detects an obstacle, a control section stops the traveling of the vehicle body based on the detection (for example, see Patent Literature 1).

### CITATION LIST

### Patent Literature

Patent Literature 1: Japanese Unexamined Patent Application Publication No. 2003-48545

### DISCLOSURE OF INVENTION

### PROBLEMS TO BE SOLVED BY THE INVENTION

Regarding the traveling vehicle described in Patent Literature 1, for equipping the vehicle body thereof with the handle for a manual operation and the obstacle sensors for collision avoidance, it takes time and effort to separately attach the handle and the obstacle sensors to the vehicle body since the handle is installed on the front-surface side of the vehicle body and the obstacle sensors are installed on the bumper of the rear-surface side of the vehicle body. Further, in addition to this, it takes time and effort to operably link the handle to the drive motor and to communicably connect the obstacle sensors to the control section. That is, there is room for improvement in ease of assemblage for configuring the traveling vehicle so as to be operable and capable of avoiding collisions.

In view of this situation, the main object of the present invention is to improve ease of assemblage for configuring the traveling vehicle so as to be manually operable and capable of avoiding collisions.

### MEANS FOR SOLVING THE PROBLEMS

The first characteristic configuration of the present invention is that a traveling vehicle includes: a traveling vehicle body on which a first control unit that controls traveling is mounted; and an operation unit that enables a manual operation of the traveling vehicle body, wherein the operation unit includes a housing having a connection section to be detachably connected to the traveling vehicle body, and wherein the housing is integrally equipped with a manual operation section, which enables instruction information for traveling to be input to the first control unit, and an obstacle sensor, which detects an obstacle existing in a traveling direction of a vehicle body for transmission to the first control unit.

According to the present configuration, when the connection section of the operation unit is connected to the traveling vehicle body, the manual operation section and the obstacle sensor included in the operation unit are in a state of being attached to the traveling vehicle body. Further, since the manual operation section and the obstacle sensor are communicably connected to the first control unit of the traveling vehicle body, the instruction information for traveling that is input from the manual operation section and detection information from the obstacle sensor can be transmitted to the first control unit of the traveling vehicle body. Accordingly, it is possible for the first control unit to control traveling of the traveling vehicle body, based on the instruction information for traveling from the manual operation section and the detection information from the obstacle sensor.

That is, only by connecting the connection section of the operation unit to the traveling vehicle body so that the manual operation section and the obstacle sensor are communicably connected to the first control unit, the traveling vehicle can be configured to be manually operable and capable of avoiding collisions, so that ease of assemblage in obtaining this configuration can be improved.

Further, since ease of assemblage can be improved in such a way, the position of the operation unit connected to the traveling vehicle can be easily changed according to the usage pattern of the traveling vehicle, the situation of the place for traveling, etc., and the arrangements of the manual operation section and the obstacle sensor relative to the traveling vehicle can be integrally optimized. As a result, it is possible to improve the operability of the manual operation section and ensure the high detection performance of the obstacle sensor.

The second characteristic configuration of the present invention is that the housing is integrally equipped with a second control unit, that is input with the instruction information for traveling from the manual operation section and detection information from the obstacle sensor and that is communicably connected to first control unit.

According to the present configuration, when the connection section of the operation unit is connected to the traveling vehicle body, the second control unit, the manual operation section, and the obstacle sensor included in the operation unit are in a state of being attached to the traveling vehicle body. Further, since the second control unit is communicably connected to the first control unit of the traveling vehicle body, the instruction information for traveling that is input from the manual operation section and detection information from the obstacle sensor can be transmitted to the first control unit of the traveling vehicle body. Accordingly, it is possible for the first control unit to control traveling of the traveling vehicle body, based on the instruction information for traveling from the manual operation section and the detection information from the obstacle sensor.

That is, only by connecting the connection section of the operation unit to the traveling vehicle body so that the second control unit is communicably connected to the first control unit, the traveling vehicle can be configured to be manually operable and capable of avoiding collisions, so that ease of assemblage in obtaining this configuration can be further improved.

The third characteristic configuration of the present invention is that the housing also serves as a bumper that protects the traveling vehicle body.

According to the present configuration, when the connection section of the operation unit is connected to the traveling vehicle body, at least a bumper is in a state of being attached to the traveling vehicle body in addition to the manual operation section and the obstacle sensor. Accordingly, by any possibility, even in a case where the traveling vehicle collides with another object due to a failure of the obstacle sensor, etc., the impact at that time can be weakened by the housing of the operation unit, and a damage caused by the collision can be reduced. Further, it is possible to improve ease of assemblage in obtaining this configuration for reducing a damage caused by a collision.

The fourth characteristic configuration of the present invention is that the manual operation section is mounted on an upper edge section of the housing.

According to the present configuration, an operation of the manual operation section by the user is easily performed, so that the operability of the traveling vehicle with the manual operation section is improved.

The fifth characteristic configuration of the present invention is that a plurality of push-button switches are mounted as the manual operation section.

According to the present configuration, the user only arbitrarily presses a push-button in order to transmit the instruction information for traveling corresponding to the push-button switch to the first control unit, and, since the first control unit controls traveling of the traveling vehicle body based on the instruction information for traveling, the operability in controlling traveling of the traveling vehicle is remarkably improved.

The sixth characteristic configuration of the present invention is that the housing, as the manual operation section, is integrally equipped with an operation section for forward traveling, which outputs instruction information for forward straight traveling, an operation section for backward traveling, which outputs instruction information for backward straight traveling, an operation section for turning left, which outputs instruction information for turning left, and an operation section for turning right, which outputs instruction information for turning right. If the instruction information for traveling is input from any of the manual operation sections, the first control unit travels the traveling vehicle body, based on the input instruction information for traveling, during a time from when the instruction information for traveling is input to when a predetermined period of time elapses, and stops the traveling vehicle body after the predetermined period of time elapses.

According to the present configuration, in a case where the operation section for forward traveling is operated, the first control unit travels the traveling vehicle body straight toward the front of the vehicle body during the time from when the instruction information for forward straight traveling is input with the operation to when the predetermined period of time elapses, and stops the traveling vehicle body after the predetermined period of time elapses.

In a case where the operation section for backward traveling is operated, the first control unit travels the traveling vehicle body straight toward the rear of the vehicle body during the time from when the instruction information for backward straight traveling is input with the operation to when the predetermined period of time elapses, and stops the traveling vehicle body after the predetermined period of time elapses.

In a case where the operation section for turning left is operated, the first control unit causes the traveling vehicle body to make a turn in the left direction during the time from when the instruction information for turning left is input with the operation to when the predetermined period of time elapses, and stops the traveling vehicle body after the predetermined period of time elapses.

In a case where the operation section for turning right is operated, the first control unit causes the traveling vehicle body to make a turn in the right direction during the time from when the instruction information for turning right is input with the operation to when the predetermined period of time elapses, and stops the traveling vehicle body after the predetermined period of time elapses.

That is, since the first control unit controls traveling of the traveling vehicle body as described above, it is possible for the user to move the traveling vehicle to a given position by operating any of the manual operation sections.

The seventh characteristic configuration of the present invention is that, the housing, as the manual operation section, is integrally equipped with an operation section for starting traveling, which outputs instruction information for starting traveling, an operation section for stopping, which outputs instruction information for stopping traveling, an operation section for turning left, which outputs instruction information for turning left, an operation section for turning right, which outputs instruction information for turning right, an operation section for acceleration, which outputs instruction information for acceleration, and an operation section for deceleration, which outputs instruction information for deceleration, and that, if the instruction information for traveling is input from any of the manual operation sections, the first control unit controls traveling of the traveling vehicle body, based on the input instruction information for traveling.

According to the present configuration, by the control operation of the first control unit, it is possible to control traveling of the traveling vehicle body such that, for example, the traveling vehicle body is caused to travel straight forward at a predetermined speed (for example, ultra-slow speed) in a case where the operation section for starting traveling is operated, the traveling vehicle body is stopped in a case where the operation section for stopping is operated, the traveling vehicle body is caused to turn left during the time where the operation section for turning left is being operated, the traveling vehicle body is caused to turn right during the time where the operation section for turning right is being operated, the vehicle speed is increased by a predetermined amount in a case where the operation section for acceleration is operated, and the vehicle speed is decreased by a predetermined amount in a case where the operation section for deceleration is operated.

In this case, it is possible for the user to cause the traveling vehicle body to travel straight forward at a predetermined speed (for example, ultra-low speed) by operating the operation section for starting traveling. It is possible for the user to stop the traveling vehicle body by operating the operation section for stopping. It is possible for the user to cause the traveling vehicle body to turn left or turn right during the time where the operation section for turning left or the operation section for turning right is being operated. It is possible for the user to increase or decrease the vehicle speed of the traveling vehicle body on a per predetermined amount basis by operation the operation section for acceleration or the operation section for deceleration.

That is, it is possible for the user to move the traveling vehicle to a given position at a given speed by operating any of the manual operating sections. Further, in a case where the traveling vehicle deviates from a predetermined traveling route, the course can be corrected so that the traveling vehicle returns to the predetermined travel route by operating the operation section for turning left and the operation section for turning right.

### BRIEF DESCRIPTION OF DRAWINGS

FIG. 1 is a perspective view of a haulage vehicle exemplified in the first embodiment.
FIG. 2 is a right-side view of the haulage vehicle exemplified in the first embodiment.
FIG. 3 is a front view of the haulage vehicle exemplified in the first embodiment.
FIG. 4 is a longitudinal front view of the haulage vehicle exemplified in the first embodiment.
FIG. 5 is a perspective view illustrating a configuration of a traveling vehicle body and operation units in the haulage vehicle exemplified in the first embodiment.
FIG. 6 is a front view illustrating a state in which the track of the haulage vehicle exemplified in the first embodiment is narrowed.
FIG. 7 is a front view illustrating a state in which the track of the haulage vehicle exemplified in the first embodiment is widened.
FIG. 8 is a rear view illustrating a state in which the track of the haulage vehicle exemplified in the first embodiment is narrowed.
FIG. 9 is a rear view illustrating a state in which the track of the haulage vehicle exemplified in the first embodiment is widened.
FIG. 10 is an enlarged plan view of a main part illustrating a configuration of an operation unit, etc., in the haulage vehicle exemplified in the first embodiment.
FIG. 11 is a perspective view illustrating a usage state of the haulage vehicle exemplified in the first embodiment.
FIG. 12 is a block diagram illustrating a control configuration of the haulage vehicle exemplified in the first embodiment.
FIG. 13 is a flowchart illustrating a control operation in a first traveling control of a first control unit in the haulage vehicle exemplified in the first embodiment.
FIG. 14 is a flowchart illustrating a control operation in a forward straight traveling control of the first control unit in the haulage vehicle exemplified in the first embodiment.
FIG. 15 is a flowchart illustrating a control operation in a second traveling control of the first control unit in the haulage vehicle exemplified in the first embodiment.
FIG. 16 is a flowchart illustrating a control operation in a first collision avoidance control of the first control unit in the haulage vehicle exemplified in the first embodiment.
FIG. 17 is a perspective view illustrating a first model of a riding-type trolley exemplified in the second embodiment.
FIG. 18 is a perspective view illustrating a second model of the riding-type trolley exemplified in the second embodiment.

### DESCRIPTION OF EMBODIMENTS

### (First Embodiment)

Hereinafter, as an example of embodiments of the present invention, an explanation will be given of the first embodiment in which the present invention is applied to a haulage vehicle, which is an example of traveling vehicles, based on the drawings.

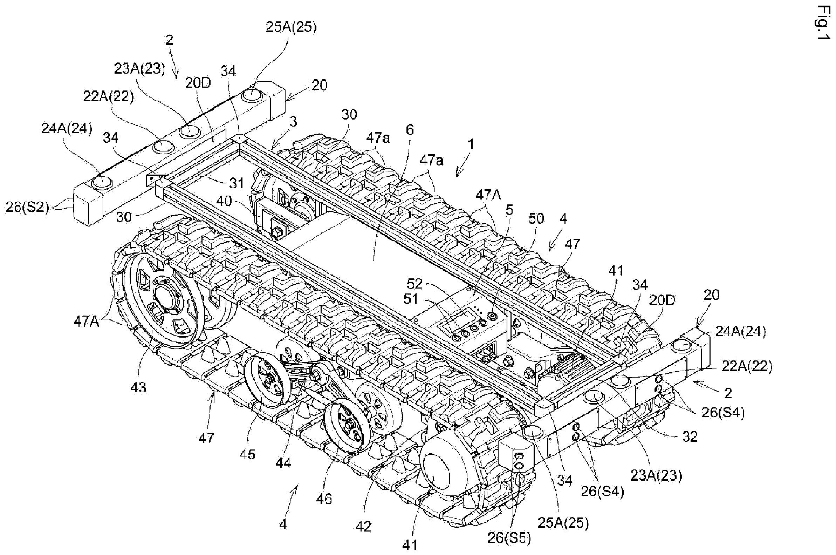

As illustrated in FIG. 1 to 3, the haulage vehicle exemplified in the present first embodiment is equipped with the electric traveling vehicle body 1 and the front and rear operation units 2 that enable manual operations from outside the traveling vehicle body 1. The traveling vehicle body 1 includes the vehicle body frame 3 forming the frame thereof, the left and right crawlers 4 connected to the vehicle body frame 3, the first control unit 5 that controls traveling of the traveling vehicle body 1, and the battery 6 that supplies electric power to the first control unit 5, etc.

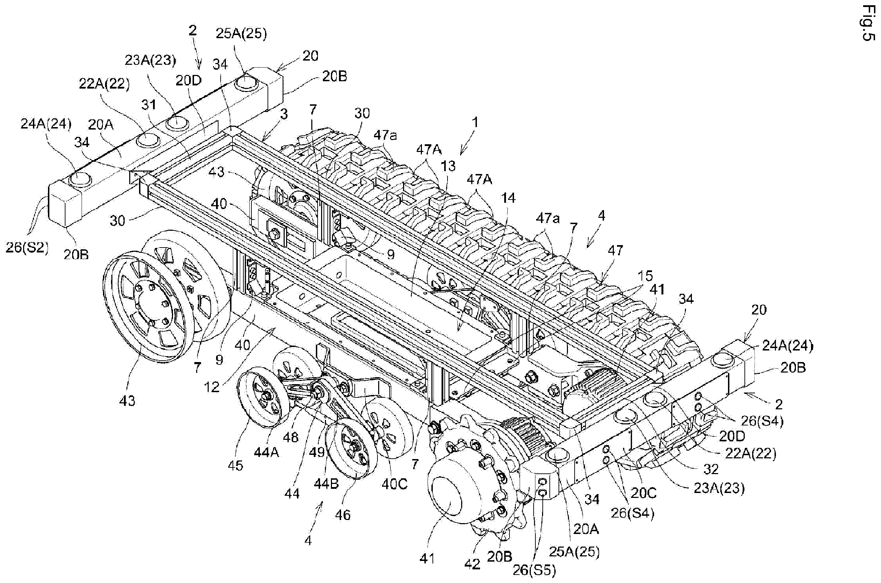

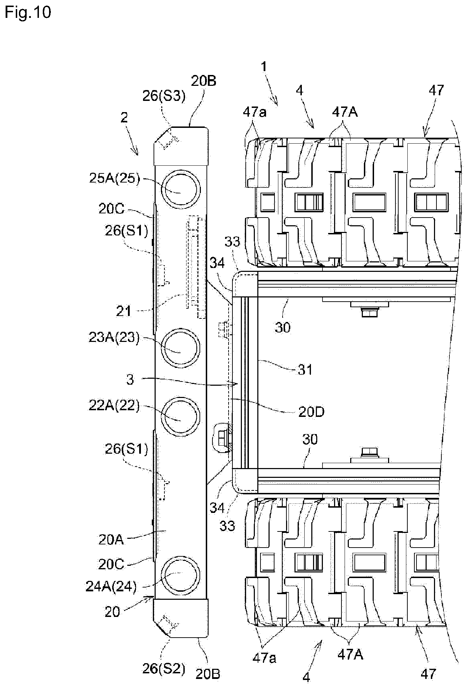

As illustrated in FIG. 1 to 2 and FIG. 4 to 10, the vehicle body frame 3 is formed in a rectangular shape elongated in the front-rear direction of the vehicle body in a plan view with the left and right side members 30 extending in the front-rear direction of the vehicle body, the first cross member 31 across the front edge sections of the left and right side members 30, and the second cross member 32 across the rear edge sections of the left and right side members 30, which are bolt-connected via the four brackets 33 (see FIG. 10). Each bracket 33 is covered with a cap 34.

As illustrated in FIG. 1 to 11, each of the left and right crawlers 4 includes the track frame 40 extending in the front-rear direction of the vehicle body, the drive sprocket 42 supported via the electric motor 41 in the rear edge section of the track frame 40, the tension-type idler wheel 43 supported via a tension mechanism (not illustrated in the drawings) in the front edge section of the track frame 40, the front and rear road wheels 45 and 46 supported via the equalizer arm 44 in the middle section of the front-rear direction of the track frame 40, the crawler belt 47 wrapped around the drive sprocket 42, the idler wheel 43, and the front and rear road wheels 45 and 46, etc. Each electric motor 41 is an in-wheel motor attached to the drive sprocket 42 and is equipped with an inverter (not illustrated in the drawings), a deceleration mechanism (not illustrated in the drawings), etc., on the inside.

That is, the left and right crawlers 4 are configured so as to be electrically and independently driven by the left and right electric motors 41. Accordingly, the traveling vehicle body 1 travels straight in the forward-traveling direction by driving the left and right crawlers 4 at an even speed in the forward-traveling direction and travels straight in the backward-traveling direction by driving the left and right crawlers 4 at an even speed in the backward-traveling direction. The traveling vehicle body 1 makes a gentle turn while traveling forward by driving the left and right crawlers 4 at uneven speeds in the forward-traveling direction and makes a gentle turn while traveling backward by driving the left and right crawlers 4 at uneven speeds in the backward-traveling direction. The traveling vehicle body 1 makes a pivotal turn by driving one of the left and right crawlers 4 while the driving of the other crawler 4 is stopped and makes a spin turn by driving the left and right crawlers 4 at an even speed in the forward-traveling direction and the backward-traveling direction. The traveling vehicle body 1 stops traveling by stopping the driving of the left and right crawlers 4.

Each crawler belt 47 is formed with a predetermined number of belt components 47A connected with a predetermined number of connection pins 47B , so as to be in an endless shape having a predetermined peripheral length. The anti-slip lug 47a is formed on the ground-contacting side of each belt component 47A. Accordingly, it is possible to improve the running performance of each crawler 4 in an orchard or a farm field where the road surface is soft.

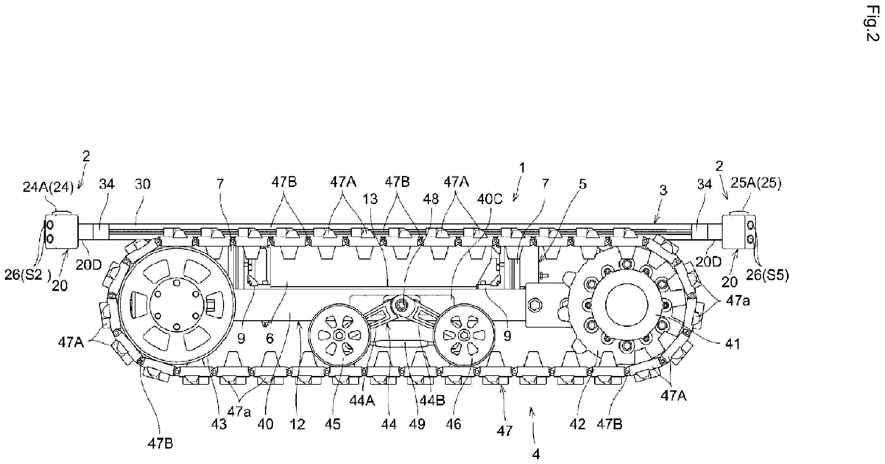

As illustrated in FIG. 2 to FIG. 9, the track frames 40 of the left and right crawlers 4 are connected to the left and right side members 30 of the vehicle body frame 3 via the front and rear connection members 7 extending in the up-down direction and the upper and lower brackets 8 and 9. The left and right track frames 40 is equipped with the front and rear connection sections 40A and 40B extending from the opposing inner surfaces thereof toward the center of the vehicle body in the left-right direction. Each of the connection sections 40Aand 40B is formed of a quadrangular steel pipe, and the front-side connection sections 40A are bolt-connected to each other via the first connection member 10 made of a quadrangular steel pipe and fitted inside them, and the rear-side connection sections 40B are bolt-connected to each other via the second connection member 11 made of a quadrangular steel pipe and fitted inside them.

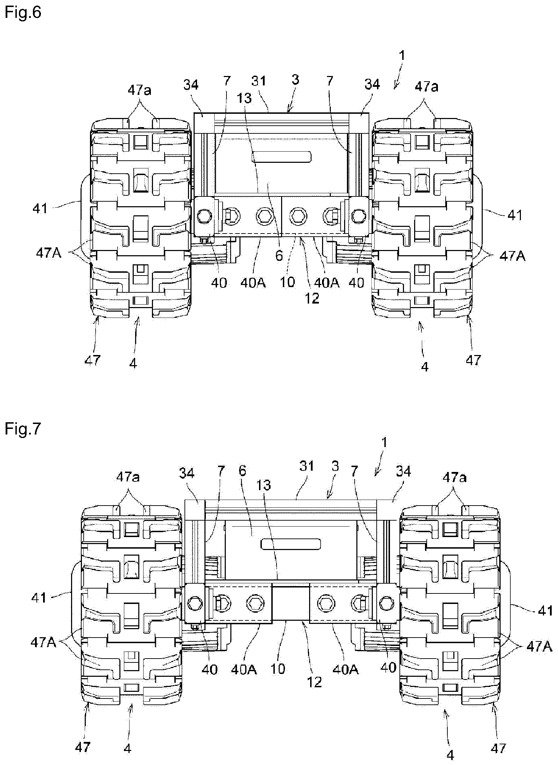

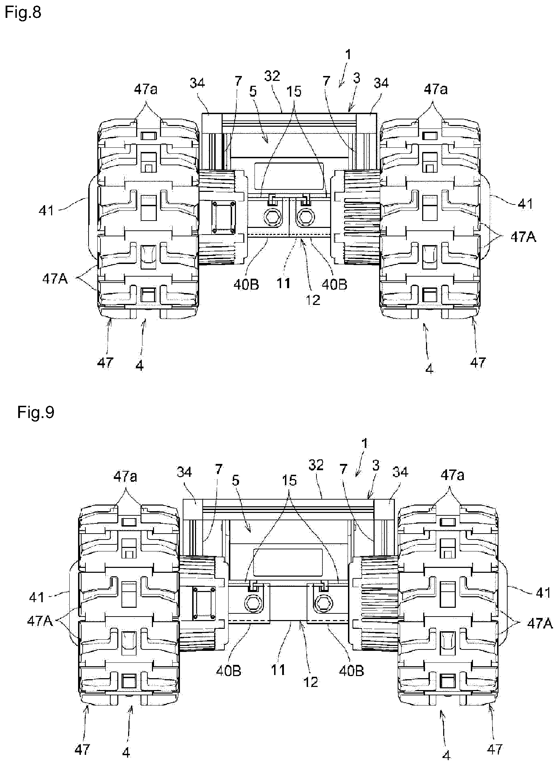

As illustrated in FIG. 6 to FIG. 9, regarding the traveling vehicle body 1, the respective cross members 31 and 32 and the respective connection members 10 and 11 extending in the left-right direction of the vehicle body can be changed to ones having different lengths in the left-right direction. That is, as illustrated in FIG. 6 and FIG. 8, by changing the respective cross members 31 and 32 and the respective connection members 10 and 11 to ones having shorter lengths in the left-right direction, it is possible to easily change the traveling vehicle body 1 to a model having a short track (the distance between the centers of the left and right crawlers 4) and a narrow vehicle body width. Further, as illustrated in FIG. 7 and FIG. 9, by changing the respective cross members 31 and 32 and the respective connection members 10 and 11 to ones having longer lengths in the left-right direction, it is possible to easily change the traveling vehicle body 1 to a model having a long track and a wide vehicle body width.

Accordingly, in a case where this haulage vehicle is used in an orchard with a narrow planting interval of trees, an agricultural land with a narrow ridge width, etc., it is possible to change the traveling vehicle body 1 to a model having a short track and vehicle body width according to the narrow planting interval and ridge width. Further, in a case where this haulage vehicle is used in an orchard with a wide planting interval of trees, an agricultural land with a wide ridge width, etc., it is possible to change the traveling vehicle body 1 to a model having a wide track and vehicle body width according to the wide planting interval and ridge width. That is, it is possible to make the haulage vehicle highly versatile so that the track and vehicle body width of the traveling vehicle body 1 can be changed according to a planting interval of trees, a ridge width, etc.

As illustrated in FIG. 2 and FIG.4 to FIG.5, each crawler 4 includes the equalizer arm support section 40C on the lateral outer side surface of the track frame 40 thereof. To each support section 40C, the support shaft 48 extending laterally outward from the support section 40C is connected. The equalizer arm 44 includes the front-side first arm 44A and the rear-side second arm 44B supported by the support shaft 48 so as to be swingable back and forth. Moreover, the front-side road wheel 45 is attached to the floating edge section of the first arm 44A, and the rear-side road wheel 46 is attached to the floating edge section of the second arm 44B. Further, the turnbuckle 49 that enables adjustment of the angle between the first arm 44A and the second arm 44B is installed between the floating edge side of the first arm 44A and the floating edge side of the second arm 44B.

According to the above-described configuration, in each crawler 4, as the angle between the first arm 44A and the second arm 44B becomes larger with an operation of the turnbuckle 49, the front-rear distance between the front and rear road wheels 45 and 46 becomes wider, and the height positions of the front and rear road wheels 45 and 46 relative to the drive sprocket 42 and the idler wheel 43 becomes higher. Accordingly, the ground contact area of each crawler 4 is widened, so that the running performance of each crawler 4 can be improved. Contrarily, in each crawler 4, as the angle between the first arm 44A and the second arm 44B becomes smaller with an operation of the turnbuckle 49, the front-rear distance between the front and rear road wheels 45 and 46 becomes narrower, and the height positions of the front and rear road wheels 45 and 46 relative to the drive sprocket 42 and the idler wheel 43 becomes lower. Accordingly, the ground contact area of each crawler 4 is narrowed, so that the turning performance of each crawler 4 can be improved.

That is, when this haulage vehicle is made to travel in an orchard or farm field where the road surface is soft, by operating the turnbuckle 49 so as to increase the angle between the first arm 44A and the second arm 44B, it is possible to improve the running performance of each crawler 4 in the orchard or farm field where the road surface is soft. Further, when this haulage vehicle is made to travel on a paved road or the like, by operating the turnbuckle 49 so as to decrease the angle between the first arm 44A and the second arm 44B, it is possible to improve the turning performance of each crawler 4 on the paved road or the like.

As illustrated in FIG. 2 to FIG. 9, in the traveling vehicle body 1, the support frame 12 having a rectangular shape in a plan view is formed with the left and right track frames 40 and the respective connection members 10 and 11. Further, the battery tray 13 is supported by this support frame 12, so as to form the battery placing section 14 on which the above-described battery 6 is mounted.

That is, the battery placing section 14 is formed between the left and right crawlers 4 of the traveling vehicle body 1, so that the relatively heavy battery 6 can thereby be mounted between the left and right crawlers 4 of the traveling vehicle body 1, that is, at the center of the traveling vehicle body 1 in the left-right direction. As a result, the left-right balance of the traveling vehicle body 1 can be made preferable, and the stability of the vehicle body can be improved.

Further, since the battery placing section 14 is formed in a relatively low position at the same height as the left and right track frames 40 of the traveling vehicle body 1, the relatively heavy battery 6 can be mounted in a relatively low position of the traveling vehicle body 1. As a result, the center of gravity of the traveling vehicle body 1 can be lowered, and the stability of the vehicle body can be further improved.

As the battery 6, a small and relatively lightweight portable-type battery that is convenient to carry and can be attached to and detached from the battery placing section 14 with a single touch is employed.

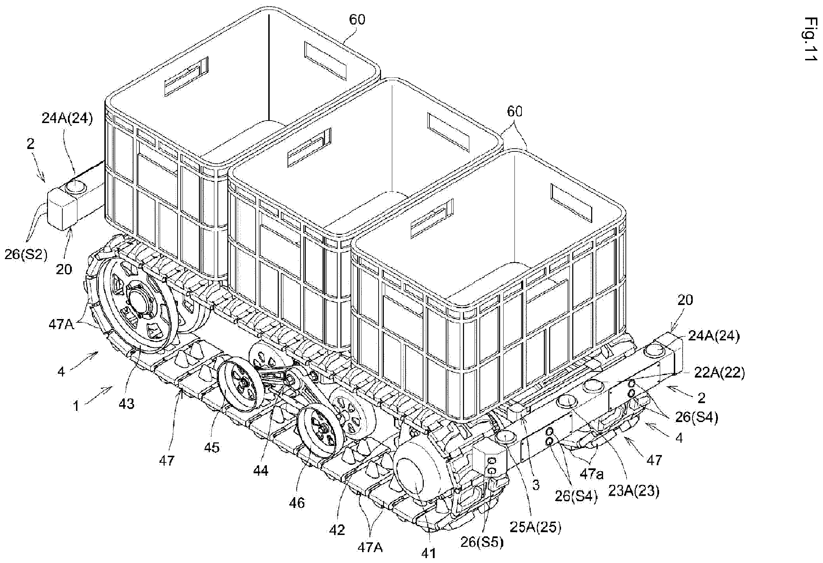

Regarding the traveling vehicle body 1, in a state where the left and right crawlers 4 are connected to the vehicle body frame 3, the height position of the vehicle body frame 3 is set so that the upper edge of the vehicle body frame 3 is higher than the upper edge of each crawler 4 and the upper edge of the battery 6 mounted on the battery placing section 14. Accordingly, as illustrated in FIG. 11, the multiple containers 60, etc., can be placed on the vehicle body frame 3 in a state of being arranged in the front-rear direction of the vehicle body.

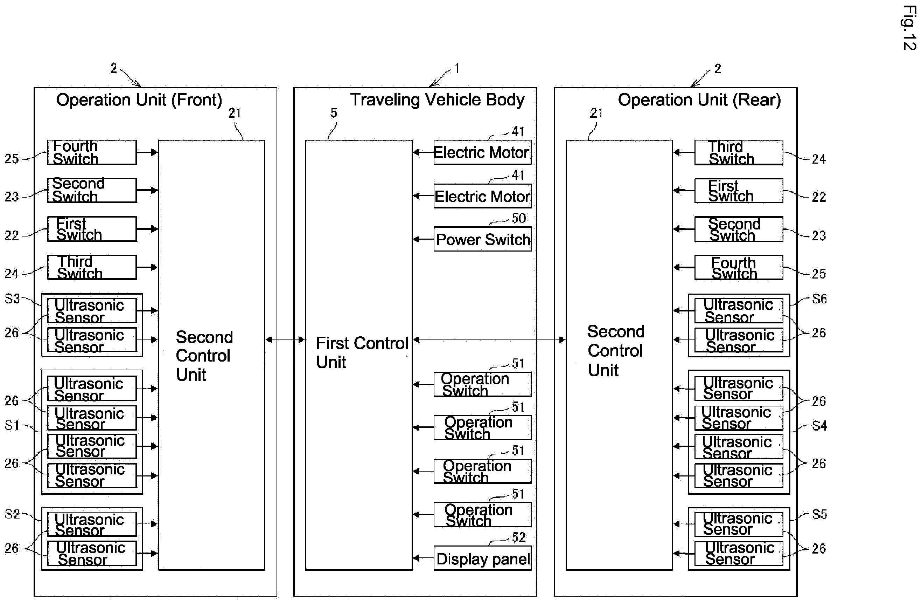

As illustrated in FIG. 1, FIG.5, FIG. 8 to 9, and FIG. 12, the first control unit 5 is supported by the rear edge section of the support frame 12 via the left and right brackets 15. The first control unit 5 is constructed with an electronic control unit in which a microcontroller, etc., are integrated, various kinds of control programs, etc. The first control unit 5 is disposed adjacent to the rear of the battery 6 in a state of being connected to the battery 6 to allow for power supply. The upper surface of the first control unit 5 is equipped with the power switch 50, the four operation switches 51 for inputting instruction information, and the display panel 52 for displaying the remaining amount of the battery 6, etc.

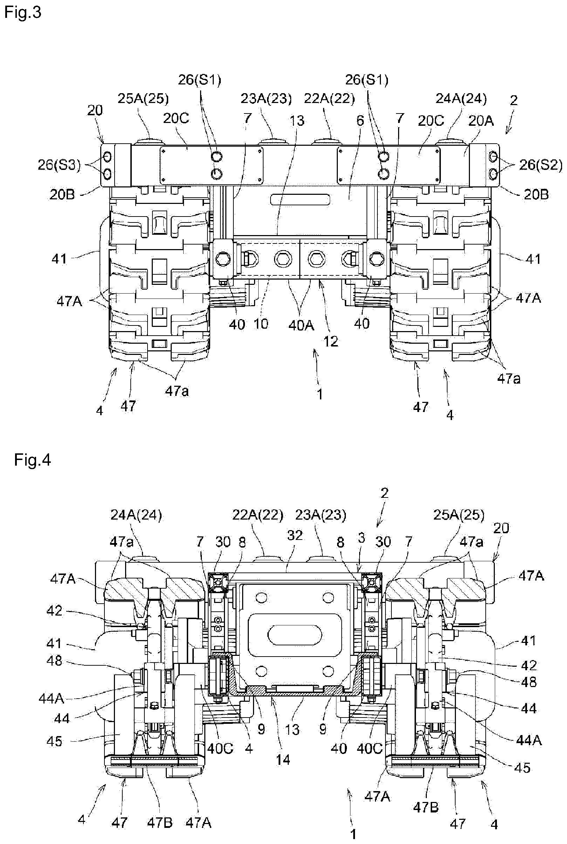

As illustrated in FIG. 3 to 5 and FIG. 10, the front and rear operation units 2 are common components having the same configuration. Each operation unit 2 includes the housing 20 that is detachably connected to the traveling vehicle body 1. To each housing 20, the first member 20A made of a quadrangular steel pipe and formed as the main part of the housing 20, the left and right second members 20B covering the openings on both of the left and right edges thereof, the left and right third members 20C covering the left and right openings formed on the front edge section of the first member 20A, and the fourth member 20D made of a quadrangular steel pipe and formed as a connection section to be detachably bolt-connected to the traveling vehicle body 1 are connected, so that the housing 20 is in a shape extending in the left-right direction of the vehicle body. Regarding each fourth member 20D, the front edge section thereof is bolt-connected to the rear edge section of the first member 20A, and the rear edge section thereof is bolt-connected to the front edge section of the first cross member 31 or to the rear edge section of the second cross member 32 of the vehicle body frame 3.

As illustrated in FIG. 1 to 5 and FIG. 10, since the fourth member 20D of each operation unit 2 is bolt-connected to the first cross member 31 or the second cross member 32 of the vehicle body frame 3, the housings 20 thereof are arranged in a posture extending in the left-right direction of the vehicle body at the front end of the traveling vehicle body 1, which is positioned further front side of the vehicle body than the front edges of the left and right crawlers 4, and at the rear end of the traveling vehicle body 1, which is positioned further rear side of the vehicle body than the rear edges of the left and right crawlers 4. Accordingly, the housings 20 whose main parts are made of the first members 20A made of square steel pipes function as bumpers for protecting the traveling vehicle body 1.

As illustrated in FIG. 1 to 5 and FIG. 10 to 12, each housing 20 is integrally equipped with the second control unit 21 connected to the first control unit 5 so as to be capable of performing mutual communication via a vehicle-mounted network, the four switches (an example of manual operation sections) 22 to 25 that enable inputting of instruction information for traveling to the second control unit 21, the eight ultrasonic sensors (an example of obstacle sensors) that detect an obstacle existing in the travel direction of the traveling vehicle body 1 for transmission to the second control unit 21. As the vehicle-mounted network, CAN (Control Area Network), CAN-FD (CAN with Flexible Data rate), vehicle-mounted Ethernet, etc., can be employed.

Each second control unit 21 is constructed with an electronic control unit in which a microcontroller, etc., are integrated, various kinds of control programs, etc. The second control unit 21 is installed inside the first member 20A of the housing 20.

Each of the switches 22 to 25 is installed at the upper edge section of the housing 20 side by side in the longitudinal direction of the housing 20. Of the respective switches 22 to 25, the first switch 22 is arranged at a position on the left of the center of the operation unit 2 in the left-right direction. The second switch 23 is arranged at a position on the right of the center of the operation unit 2 in the left-right direction. The third switch 24 is arranged at a position on the left edge side of the operation unit 2. The fourth switch 25 is arranged at a position on the right edge side of the operation unit 2. Push-button switches including the large-diameter operation sections 22A to 25D are employed for the respective switches 22 to 25. The respective switches 22 to 25 are installed on the upper edge section of the housing 20 in a state where the operation sections 22A to 25D thereof are exposed above the housing 20. The respective switches 22 to 25 are communicably connected to the second control unit 21 via communication cables.

As described above, although the front and rear operation units 2 are common components having the same configuration, the connection with the second control unit 21 is set so that the functions of the respective switches 22 to 25 differ according to the arrangements thereof. More specifically, the first switch 22 in the operation unit 2 on the front side of the vehicle body functions as a forward-traveling switch (an example of a forward-traveling operation section) that inputs instruction information for forward straight traveling to the second control unit 21 as the instruction information for traveling when the operation section 22A thereof is pressed. The second switch 23 in the operation unit 2 on the front side of the vehicle body functions as a backward-traveling switch (an example of a backward-traveling operation section) that inputs instruction information for backward straight traveling to the second control unit 21 as the instruction information for traveling when the operation section 23A thereof is pressed. The third switch 24 in the operation unit 2 on the front side of the vehicle body functions as a forward-traveling left-turn switch (an example of a left-turn operation section) that inputs instruction information for forward-traveling left turn to the second control unit 21 as the instruction information for traveling when the operation section 24A thereof is pressed. The fourth switch 25 in the operation unit 2 on the front side of the vehicle body functions as a forward-traveling right-turn switch (an example of a right-turn operation section) that inputs instruction information for forward-traveling right turn to the second control unit 21 as the instruction information for traveling when the operation section 25A thereof is pressed. The first switch 22 in the operation unit 2 on the rear side of the vehicle body functions as a backward-traveling switch (an example of the backward-traveling operation section) that inputs instruction information for backward straight traveling to the second control unit 21 as the instruction information for traveling when the operation section 22A thereof is pressed. The second switch 23 in the operation unit 2 on the rear side of the vehicle body functions as a forward-traveling switch (an example of the forward-traveling operation section) that inputs instruction information for forward straight traveling to the second control unit 21 as the instruction information for traveling when the operation section 23A thereof is pressed. The third switch 24 in the operation unit 2 on the rear side of the vehicle body functions as a backward-traveling right-turn switch (an example of the right-turn operation section) that inputs instruction information for backward-traveling right turn to the second control unit 21 as the instruction information for traveling when the operation section 24A thereof is pressed. The fourth switch 25 in the operation unit 2 on the rear side of the vehicle body functions as a backward-traveling left-turn switch (an example of the left-turn operation section) that inputs instruction information for backward-traveling left turn to the second control unit 21 as the instruction information for traveling when the operation section 25A thereof is pressed.

Each of the ultrasonic sensors 26 is communicably connected to the second control unit 21 via a communication cable. The respective ultrasonic sensors 26 are attached to the left and right third members 20C and the left and right caps 34 of the operation units 2 in pairs arranged in the up-down direction. Of the respective ultrasonic sensors 26, the four ultrasonic sensors 26 attached to the left and right third members 20C of the front-side operation unit 2 configure the first sensor unit S1 of which the detection ranges thereof are set in the forward straight traveling direction of the traveling vehicle body 1. The two ultrasonic sensors 26 attached to the cap 34 on the left side of the vehicle body in the front-side operation unit 2 configure the second sensor unit S2 of which the detection ranges thereof are set in the forward-traveling left-turn direction of the traveling vehicle body 1. The two ultrasonic sensors 26 attached to the cap 34 on the right side of the vehicle body in the front-side operation unit 2 configure the third sensor unit S3 of which the detection ranges thereof are set in the forward-traveling right-turn direction of the traveling vehicle body 1. The four ultrasonic sensors 26 attached to the left and right third members 20C of the rear-side operation unit 2 configure the fourth sensor unit S4 of which the detection ranges thereof are set in the backward straight traveling direction of the traveling vehicle body 1. The two ultrasonic sensors 26 attached to the cap 34 on the left side of the vehicle body in the rear-side operation unit 2 configure the fifth sensor unit S5 of which the detection ranges thereof are set in the backward-traveling left-turn direction of the traveling vehicle body 1. The two ultrasonic sensors 26 attached to the cap 34 on the right side of the vehicle body in the rear-side operation unit 2 configure the sixth sensor unit S6 of which the detection ranges thereof are set in the backward-traveling right-turn direction of the traveling vehicle body 1.

Upon activation, the first control unit 5 executes the first traveling control for controlling traveling of the traveling vehicle body 1, based on instruction information input from the respective switches 22 to 25 via the second control unit 21 of each operation unit 2, and the second traveling control for controlling traveling of the traveling vehicle body 1, based on detection information input from the respective ultrasonic sensors 26 via the second control unit 21 of each operation unit 2. In both of the first traveling control and the second traveling control, the first control unit 5 controls the rotation directions and rotation speeds of the electric motors 41 installed in the left and right crawlers 4, in order to control traveling of the traveling vehicle body 1.

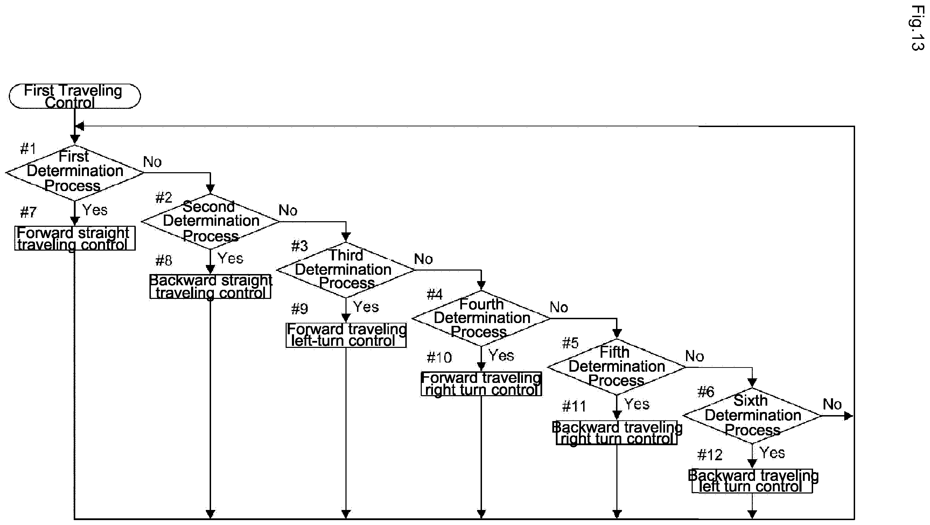

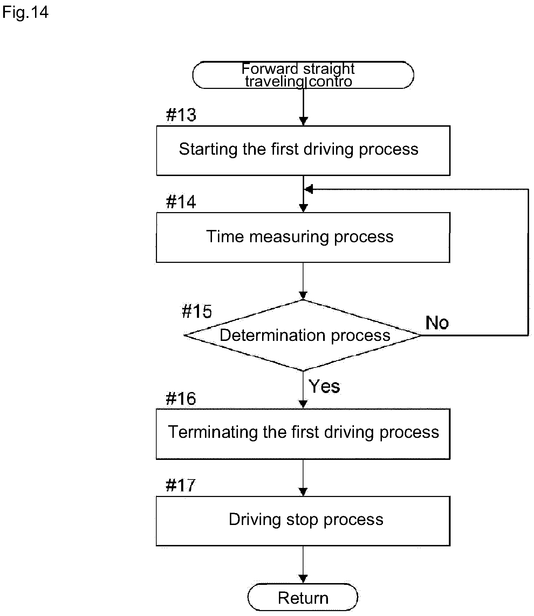

Hereinafter, the control operation of the first control unit 5 in the first traveling control will be explained, based on the flowcharts illustrated in FIG. 13 to 14. Note that the first traveling control includes forward straight traveling control, forward-traveling left-turn control, forward-traveling right-turn control, backward straight traveling control, backward-traveling right-turn control, and backward-traveling left-turn control. Further, since these controls have the same processing procedure and each process is similar, the flowchart is exemplified in FIG. 14 for explanation of the forward straight traveling control, and, for explanation of the controls other than the forward straight traveling control, flowcharts are not exemplified.

As illustrated in the flowchart of FIG. 13, the first control unit 5 performs the first to sixth determination processes for determining whether or not instruction information is input from any of the switches 22 to 25 of either one of the front and rear operation units 2 (Steps #1 to 6). In the first determination process, when instruction information for forward straight traveling is input from the first switch 22 of the operation unit 2 on the front side of the vehicle body or the second switch 23 of the operation unit 2 on the rear side of the vehicle body, the first control unit 5 transitions to the forward straight traveling control (Step #7). In the second determination process, when instruction information for backward straight traveling is input from the second switch 23 of the operation unit 2 on the front side of the vehicle body or the first switch 22 of the operation unit 2 on the rear side of the vehicle body, the first control unit 5 transitions to the backward straight traveling control (Step #8). In the third determination process, when instruction information for forward-traveling left turn is input from the third switch 24 of the operation unit 2 on the front side of the vehicle body, the first control unit 5 transitions to the forward-traveling left-turn control (Step #9). In the fourth determination process, when instruction information for forward-traveling right turn is input from the fourth switch 25 of the operation unit 2 on the front side of the vehicle body, the first control unit 5 transitions to the forward-traveling right-turn control (Step #10). In the fifth determination process, when instruction information for backward-traveling right turn is input from the third switch 24 of the operation unit 2 on the rear side of the vehicle body, the first control unit 5 transitions to the backward-traveling right-turn control (Step #11). In the sixth determination process, when instruction information for backward-traveling left turn is input from the fourth switch 25 of the operation unit 2 on the rear side of the vehicle body, the first control unit 5 transitions to the backward-traveling left-turn control (Step #12). When instruction information is not input from any of the switches 22 to 25 of the respective operation units 2 in the first to sixth determination processes, the first control unit 5 returns to the first determination process of Step #1.

As illustrated in the flowchart of FIG. 14, in the forward straight traveling control, the first control unit 5 starts the first driving process in which the left and right electric motors 41 are evenly driven at a predetermined speed in the forward rotation direction (Step #13) and starts a time-measuring process for measuring the period of time from the start of the first driving process (Step #14). Thereafter, a determination process for determining whether or not the period of time measured in the time-measuring process has reached a predetermined period of time that is set in advance is performed (Step #15), and, when the measured period of time has reached the predetermined period of time, the first driving process is terminated (Step #16) and a driving-stop process for stopping the driving of the left and right electric motors 41 is performed (Step #17).

In the backward straight traveling control, the first control unit 5 starts the second driving process in which the left and right electric motors 41 are evenly driven at a predetermined speed in the reverse rotation direction and starts a time-measuring process for measuring the period of time from the start of the second driving process. Thereafter, a determination process for determining whether or not the period of time measured in the time-measuring process has reached a predetermined period of time that is set in advance is performed, and, when the measured period of time has reached the predetermined period of time, the second driving process is terminated and the above-described driving-stop process is performed.

In the forward-traveling left-turn control, the first control unit 5 starts the third driving process in which the left and right electric motors 41 are unevenly driven at predetermined speeds in the forward rotation direction, so that the rotation speed of the electric motor 41 on the left side (the inner side of the turn) becomes slower than the rotation speed of the electric motor 41 on the right side (the outer side of the turn), and starts a time-measuring process for measuring the period of time from the start of the third driving process. Thereafter, a determination process for determining whether or not the period of time measured in the time-measuring process has reached a predetermined period of time that is set in advance is performed, and, when the measured period of time has reached the predetermined period of time, the third driving process is terminated and the above-described driving-stop process is performed.

In the forward-traveling right-turn control, the first control unit 5 starts the fourth driving process in which the left and right electric motors 41 are unevenly driven at predetermined speeds in the forward rotation direction, so that the rotation speed of the electric motor 41 on the right side (the inner side of the turn) becomes slower than the rotation speed of the electric motor 41 on the left side (the outer side of the turn), and starts a time-measuring process for measuring the period of time from the start of the fourth driving process. Thereafter, a determination process for determining whether or not the period of time measured in the time-measuring process has reached a predetermined period of time that is set in advance is performed, and, when the measured period of time has reached the predetermined period of time, the fourth driving process is terminated and the above-described driving-stop process is performed.

In the backward-traveling right-turn control, the first control unit 5 starts the fifth driving process in which the left and right electric motors 41 are unevenly driven at predetermined speeds in the reverse rotation direction, so that the rotation speed of the electric motor 41 on the right side (the inner side of the turn) becomes slower than the rotation speed of the electric motor 41 on the left side (the outer side of the turn), and starts a time-measuring process for measuring the period of time from the start of the fifth driving process. Thereafter, a determination process for determining whether or not the period of time measured in the time-measuring process has reached a predetermined period of time that is set in advance is performed, and, when the measured period of time has reached the predetermined period of time, the fifth driving process is terminated and the above-described driving-stop process is performed.

In the backward-traveling left-turn control, the first control unit 5 starts the sixth driving process in which the left and right electric motors 41 are unevenly driven at predetermined speeds in the reverse rotation direction, so that the rotation speed of the electric motor 41 on the left side (the inner side of the turn) becomes slower than the rotation speed of the electric motor 41 on the right side (the outer side of the turn), and starts a time-measuring process for measuring the period of time from the start of the sixth driving process. Thereafter, a determination process for determining whether or not the period of time measured in the time-measuring process has reached a predetermined period of time that is set in advance is performed, and, when the measured period of time has reached the predetermined period of time, the sixth driving process is terminated and the above-described driving-stop process is performed.

With the above-described control operation, in a case where the first switch 22 of the operation unit 2 on the front side of the vehicle body or the second switch 23 of the operation unit 2 on the rear side of the vehicle body is operated, during the time from when the instruction information for forward straight traveling is input to the first control unit 5 with the operation up to when the predetermined period of time elapses, this haulage vehicle is maintained in the forward-traveling even-speed driving state, in which the left and right crawlers 4 are driven at an even speed in the forward-traveling direction, so as to be in the forward straight traveling state, in which the traveling vehicle body 1 travels straight toward the front of the vehicle body. Then, after the elapse of the predetermined period of time, the left and right crawlers 4 are switched to a driving-stopped state, and the traveling vehicle body 1 is maintained in a traveling-stopped state. In a case where the second switch 23 of the operation unit 2 on the front side of the vehicle body or the first switch 22 of the operation unit 2 on the rear side of the vehicle body is operated, during the time from when the instruction information for backward straight traveling is input to the first control unit 5 with the operation up to when the predetermined period of time elapses, this haulage vehicle is maintained in the backward-traveling even-speed driving state, in which the left and right crawlers 4 are driven at an even speed in the backward-traveling direction, so as to be in the backward straight traveling state, in which the traveling vehicle body 1 travels straight toward the rear of the vehicle body. Then, after the elapse of the predetermined period of time, the left and right crawlers 4 are switched to the driving-stopped state, and the traveling vehicle body 1 is maintained in the traveling-stopped state. In a case where the third switch 24 of the operation unit 2 on the front side of the vehicle body is operated, during the time from when the instruction information for forward-traveling left turn is input to the first control unit 5 with the operation up to when the predetermined period of time elapses, this haulage vehicle is maintained in the forward-traveling uneven-speed driving state for a left turn, in which the left and right crawlers 4 are driven at uneven speeds in the forward-traveling direction so that the driving speed of the crawler 4 on the left side (the inner side of the turn) becomes slower than the driving speed of the crawler 4 on the right side (the outer side of the turn), so as to be maintained in the forward-traveling left-turn state, in which the traveling vehicle body 1 makes a gentle turn in the left direction while traveling forward. Then, after the elapse of the predetermined period of time, the left and right crawlers 4 are switched to the driving-stopped state, and the traveling vehicle body 1 is maintained in the traveling-stopped state. In a case where the fourth switch 25 of the operation unit 2 on the front side of the vehicle body is operated, during the time from when the instruction information for forward-traveling right turn is input to the first control unit 5 with the operation up to when the predetermined period of time elapses, this haulage vehicle is maintained in the forward-traveling uneven-speed driving state for a right turn, in which the left and right crawlers 4 are driven at uneven speeds in the forward-traveling direction so that the driving speed of the crawler 4 on the right side (the inner side of the turn) becomes slower than the driving speed of the crawler 4 on the left side (the outer side of the turn), so as to be maintained in the forward-traveling right-turn state, in which the traveling vehicle body 1 makes a gentle turn in the right direction while traveling forward. Then, after the elapse of the predetermined period of time, the left and right crawlers 4 are switched to the driving-stopped state, and the traveling vehicle body 1 is maintained in the traveling-stopped state. In a case where the third switch 24 of the operation unit 2 on the rear side of the vehicle body is operated, during the time from when the instruction information for backward-traveling right turn is input to the first control unit 5 with the operation up to when the predetermined period of time elapses, this haulage vehicle is maintained in the backward-traveling uneven-speed driving state for a right turn, in which the left and right crawlers 4 are driven at uneven speeds in the backward-traveling direction so that the driving speed of the crawler 4 on the right side (the inner side of the turn) becomes slower than the driving speed of the crawler 4 on the left side (the outer side of the turn), so as to be maintained in the backward-traveling right-turn state, in which the traveling vehicle body 1 makes a gentle turn in the right direction while traveling backward. Then, after the elapse of the predetermined period of time, the left and right crawlers 4 are switched to the driving-stopped state, and the traveling vehicle body 1 is maintained in the traveling-stopped state. In a case where the fourth switch 25 of the operation unit 2 on the rear side of the vehicle body is operated, during the time from when the instruction information for backward-traveling left turn is input to the first control unit 5 with the operation up to when the predetermined period of time elapses, this haulage vehicle is maintained in the backward-traveling uneven-speed driving state for a left turn, in which the left and right crawlers 4 are driven at uneven speeds in the backward-traveling direction so that the driving speed of the crawler 4 on the left side (the inner side of the turn) becomes slower than the driving speed of the crawler 4 on the right side (the outer side of the turn), so as to be maintained in the backward-traveling left-turn state, in which the traveling vehicle body 1 makes a gentle turn in the left direction while traveling backward. Then, after the elapse of the predetermined period of time, the left and right crawlers 4 are switched to the driving-stopped state, and the traveling vehicle body 1 is maintained in the traveling-stopped state.

That is, since the first control unit 5 executes the first traveling control for controlling traveling of the traveling vehicle body 1 as described above, it is possible for the user to move the haulage vehicle to a given position by operating any of the switches 22 to 25 of the front and rear operation units 2.

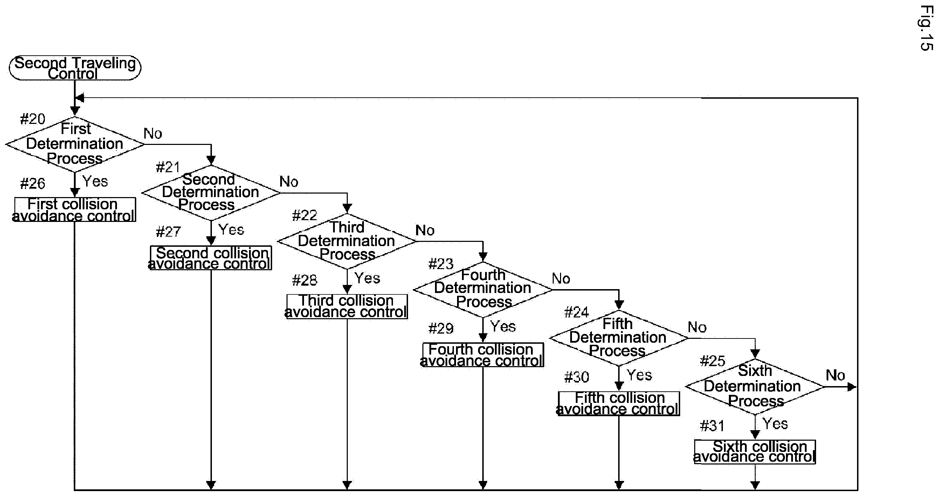

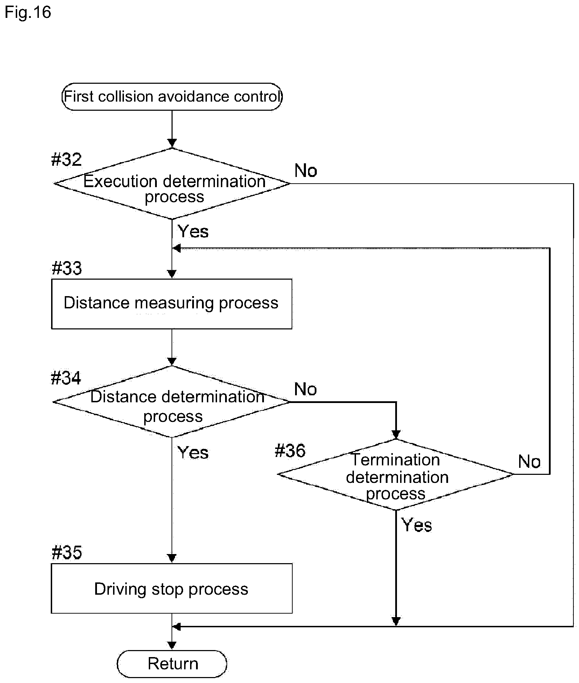

Hereinafter, the control operation of the first control unit 5 in the second traveling control will be explained, based on the flowcharts illustrated in FIG. 15 to FIG. 16. Note that the second traveling control includes the first to sixth collision avoidance controls. Further, since these collision avoidance controls have the same processing procedure and each process is similar, the flowchart is exemplified in FIG. 16 for explanation of the first collision avoidance control, and, for explanation of the other collision avoidance controls, flowcharts are not exemplified.

As illustrated in the flowchart of FIG. 15, the first control unit 5 performs the first to sixth determination processes for determining whether or not an obstacle is detected by any of the ultrasonic sensors 26 of the respective sensor units S1 to S6 (Steps #20 to 25). When an obstacle is detected by any of the ultrasonic sensors 26 of the first sensor unit S1 in the first determination process, the first control unit 5 transitions to the first collision avoidance control (Step #26). When an obstacle is detected by any of the ultrasonic sensors 26 of the second sensor unit S2 in the second determination process, the first control unit 5 transitions to the second collision avoidance control (Step #27). When an obstacle is detected by any of the ultrasonic sensors 26 of the third sensor unit S3 in the third determination process, the first control unit 5 transitions to the third collision avoidance control (Step #28). When an obstacle is detected by any of the ultrasonic sensors 26 of the fourth sensor unit S4 in the fourth determination process, the first control unit 5 transitions to the fourth collision avoidance control (Step #29). When an obstacle is detected by any of the ultrasonic sensors 26 of the fifth sensor unit S5 in the fifth determination process, the first control unit 5 transitions to the fifth collision avoidance control (Step #30). When an obstacle is detected by any of the ultrasonic sensors 26 of the sixth sensor unit S6 in the sixth determination process, the first control unit 5 shifts to the sixth collision avoidance control (Step #31). When no obstacle is detected by any of the ultrasonic sensors 26 of the respective sensor units S1 to S6 in the first to sixth determination processes of the first control unit 5, the first control unit 5 returns the first determination process of Step #20.

As illustrated in the flowchart of FIG. 16, in the first collision avoidance control, the first control unit 5 performs an execution determination process for determining whether or not the above-described forward straight traveling control is being executed (Step #32). Then, in this execution determination process, if the forward straight traveling control is being executed, a distance-measuring process for obtaining the distance to the obstacle based on detection information from the ultrasonic sensors 26 of the first sensor unit S1 is performed (Step #33), then a distance determination process for determining whether or not the obtained distance to the obstacle is shorter than the first set distance is performed (Step #34), and then the above-described driving-stop process is performed when the measured distance to the obstacle is shorter than the first set distance (Step #35). Note that the first set distance is set as a distance that allows for an appropriate factor of safety for the traveling distance of the traveling vehicle body 1 in the forward straight traveling control. Accordingly, this haulage vehicle is prevented from colliding with an obstacle while the forward straight traveling control is being executed.

If the forward straight traveling control is not being executed in the execution determination process of Step #32, the first control unit 5 transitions to the second determination process of Step #21 described in FIG. 15. Further, in the distance determination process of Step #34 described above, when the measured distance to the obstacle is equal to or longer than the first set distance, a termination determination process for determining whether or not the forward straight traveling control is terminated is performed (Step #36), so that, if the forward straight traveling control is not terminated, the transition to the distance-measuring process of Step #33 is performed, and, if the forward straight traveling control is terminated, the transition to the second determination process of Step #21 described in FIG. 15 is performed.

In the second collision avoidance control, the first control unit 5 performs an execution determination process for determining whether or not the above-described forward-traveling left-turn control is being executed. Then, in this execution determination process, if the forward-traveling left-turn control is being executed, a distance-measuring process for obtaining the distance to the obstacle based on detection information from the ultrasonic sensors 26 of the second sensor unit S2 is performed, then a distance determination process for determining whether or not the obtained distance to the obstacle is shorter than the second set distance is performed, and then the above-described driving-stop process is performed when the measured distance to the obstacle is shorter than the second set distance. Note that the second set distance is set as a distance that allows for an appropriate factor of safety for the traveling distance of the traveling vehicle body 1 in the forward-traveling left-turn control. Accordingly, this haulage vehicle is prevented from colliding with an obstacle while the forward-traveling left-turn control is being executed.

If the forward-traveling left-turn control is not being executed in the execution determination process of the second collision avoidance control, the first control unit 5 transitions to the third determination process of Step #22 described in FIG. 15. Further, in the distance determination process of the second collision avoidance control, when the measured distance to the obstacle is equal to or longer than the second set distance, a termination determination process for determining whether or not the forward-traveling left-turn control is terminated is performed, so that, if the forward-traveling left-turn control is not terminated, the transition to the distance-measuring process of the second collision avoidance control is performed, and, if the forward-traveling left-turn control is terminated, the transition to the third determination process of Step #22 described in FIG. 15 is performed.

In the third collision avoidance control, the first control unit 5 performs an execution determination process for determining whether or not the above-described forward-traveling right-turn control is being executed. Then, in this execution determination process, if the forward-traveling right-turn control is being executed, a distance-measuring process for obtaining the distance to the obstacle based on detection information from the ultrasonic sensors 26 of the third sensor unit S3 is performed, then a distance determination process for determining whether or not the obtained distance to the obstacle is shorter than the third set distance is performed, and then the above-described driving-stop process is performed when the measured distance to the obstacle is shorter than the third set distance. Note that the third set distance is set as a distance that allows for an appropriate factor of safety for the traveling distance of the traveling vehicle body 1 in the forward-traveling right-turn control. Accordingly, this haulage vehicle is prevented from colliding with an obstacle while the forward-traveling right-turn control is being executed.

If the forward-traveling right-turn control is not being executed in the execution determination process of the third collision avoidance control, the first control unit 5 transitions to the fourth determination process of Step #23 described in FIG. 15. Further, in the distance determination process of the third collision avoidance control, when the measured distance to the obstacle is equal to or longer than the third set distance, a termination determination process for determining whether or not the forward-traveling right-turn control is terminated is performed, so that, if the forward-traveling right-turn control is not terminated, the transition to the distance-measuring process of the third collision avoidance control is performed, and, if the forward-traveling right-turn control is terminated, the transition to the fourth determination process of Step #23 described in FIG. 15 is performed.

In the fourth collision avoidance control, the first control unit 5 performs an execution determination process for determining whether or not the above-described backward straight traveling control is being executed. Then, in this execution determination process, if the backward straight traveling control is being executed, a distance-measuring process for obtaining the distance to the obstacle based on detection information from the ultrasonic sensors 26 of the fourth sensor unit S4 is performed, then a distance determination process for determining whether or not the obtained distance to the obstacle is shorter than the fourth set distance is performed, and then the above-described driving-stop process is performed when the measured distance to the obstacle is shorter than the fourth set distance. Note that the fourth set distance is set as a distance that allows for an appropriate factor of safety for the traveling distance of the traveling vehicle body 1 in the backward straight traveling control. Accordingly, this haulage vehicle is prevented from colliding with an obstacle while the backward straight traveling control is being executed.

If the backward straight traveling control is not being executed in the execution determination process of the fourth collision avoidance control, the first control unit 5 transitions to the fifth determination process of Step #24 described in FIG. 15. Further, in the distance determination process of the fourth collision avoidance control, when the measured distance to the obstacle is equal to or longer than the fourth set distance, a termination determination process for determining whether or not the backward straight traveling control is terminated is performed, so that, if the backward straight traveling control is not terminated, the transition to the distance-measuring process of the fourth collision avoidance control is performed, and, if the backward straight traveling control is terminated, the transition to the fifth determination process of Step #24 described in FIG. 15 is performed.

In the fifth collision avoidance control, the first control unit 5 performs an execution determination process for determining whether or not the above-described backward-traveling left-turn control is being executed. Then, in this execution determination process, if the backward-traveling left-turn control is being executed, a distance-measuring process for obtaining the distance to the obstacle based on detection information from the ultrasonic sensors 26 of the fifth sensor unit S5 is performed, then a distance determination process for determining whether or not the obtained distance to the obstacle is shorter than the fifth set distance is performed, and then the above-described driving-stop process is performed when the measured distance to the obstacle is shorter than the fifth set distance. Note that the fifth set distance is set as a distance that allows for an appropriate factor of safety for the traveling distance of the traveling vehicle body 1 in the backward-traveling left-turn control. Accordingly, this haulage vehicle is prevented from colliding with an obstacle while the backward-traveling left-turn control is being executed.

If the backward-traveling left-turn control is not being executed in the execution determination process of the fifth collision avoidance control, the first control unit 5 transitions to the sixth determination process of Step #25 described in FIG. 15. Further, in the distance determination process of the fifth collision avoidance control, when the measured distance to the obstacle is equal to or longer than the fifth set distance, a termination determination process for determining whether or not the backward-traveling left-turn control is terminated is performed, so that, if the backward-traveling left-turn control is not terminated, the transition to the distance-measuring process of the fifth collision avoidance control is performed, and, if the backward-traveling left-turn control is terminated, the transition to the sixth determination process of Step #25 described in FIG. 15 is performed.

In the sixth collision avoidance control, the first control unit 5 performs an execution determination process for determining whether or not the above-described backward-traveling right-turn control is being executed. Then, in this execution determination process, if the backward-traveling right-turn control is being executed, a distance-measuring process for obtaining the distance to the obstacle based on detection information from the ultrasonic sensors 26 of the sixth sensor unit S6 is performed, then a distance determination process for determining whether or not the obtained distance to the obstacle is shorter than the sixth set distance is performed, and then the above-described driving-stop process is performed when the measured distance to the obstacle is shorter than the sixth set distance. Note that the sixth set distance is set as a distance that allows for an appropriate factor of safety for the traveling distance of the traveling vehicle body 1 in the backward-traveling right-turn control. Accordingly, this haulage vehicle is prevented from colliding with an obstacle while the backward-traveling right-turn control is being executed.

If the backward-traveling right-turn control is not being executed in the execution determination process of the sixth collision avoidance control, the first control unit 5 transitions to the first determination process of Step #20 described in FIG. 15. Further, in the distance determination process of the sixth collision avoidance control, when the measured distance to the obstacle is equal to or longer than the sixth set distance, a termination determination process for determining whether or not the backward-traveling right-turn control is terminated is performed, so that, if the backward-traveling right-turn control is not terminated, the transition to the distance-measuring process of the sixth collision avoidance control is performed, and, if the backward-traveling right-turn control is terminated, the transition to the first determination process of Step #20 described in FIG. 15 is performed.

With the above configuration of this haulage vehicle, when the connection section 20D of each operation unit 2 is connected to the traveling vehicle body 1, the second control unit 21, the four switches 22 to 25, and the eight ultrasonic sensors 26 installed on each operation unit 2 are in a state of being attached to the traveling vehicle body 1. Further, if each second control unit 21 is communicably connected to the first control unit 5 of the traveling vehicle body 1, instruction information for traveling that is input from each of the switches 22 to 25 and detection information from each of the ultrasonic sensors 26 can thereby be transmitted to the first control unit 5 of the traveling vehicle body 1 via each second control unit 21. Accordingly, it is possible for the first control unit 5 to control traveling of the traveling vehicle body 1, based on instruction information for traveling from each of the switches 22 to 25 and detection information from each of the ultrasonic sensors 26.

That is, only by connecting the connection section 20D of each operation unit 2 to the traveling vehicle body 1 so that each second control unit 21 is communicably connected to the first control unit 5, this haulage vehicle can be configured to be manually operable and capable of avoiding collisions, and ease of assemblage in obtaining this configuration can be improved.

Further, since ease of assemblage can be improved in such a way, the position of each operation unit 2 connected to this haulage vehicle can be easily changed according to the usage pattern of this haulage vehicle, the situation of the place for traveling, etc., and the arrangement of each of the switches 22 to 25 and the ultrasonic sensors 26 relative to the haulage vehicle can be integrally optimized. As a result, it is possible to improve the operability of each of the switches 22 to 25 and ensure the high detection performance of each of the ultrasonic sensors 26.

Further, since the housing 20 of each operation unit 2 also serves as a bumper for protecting the traveling vehicle body 1, when the respective operation units 2 are connected to the traveling vehicle body 1, this haulage vehicle is in a state where front and rear bumpers are attached to the traveling vehicle body 1 in addition to the second control units 21, the respective switches 22 to 25, and the respective ultrasonic sensors 26 thereof. Accordingly, by any possibility, even in a case where the traveling vehicle body 1 collides with another object due to a failure of any of the ultrasonic sensors 26, etc., the impact at that time can be weakened by the housing 20 of the operation units 2, and a damage caused by the collision can be reduced. Further, it is possible to improve ease of assemblage in obtaining this configuration for reducing a damage caused by a collision.

Further, in this haulage vehicle, since the respective switches 22 to 25 are installed in the upper edge section of the housing 20 of each operation unit 2, it is easy for the user outside the vehicle to operate each of the switches 22 to 25, so that the operability of the haulage vehicle with each of the switches 22 to 25 is improved. Further, since the respective switches 22 to 25 are push-button switches including the large-diameter operation sections 22A to 25D, it is possible for the user to arbitrarily press any of the operation sections 22A to 25D of the switches 22 to 25, in order to transmit the instruction information for traveling corresponding to the switches 22 to 25 to the first control unit 5 via the second control unit 21, and, since the first control unit 5 controls traveling of the traveling vehicle body 1 based on the instruction information for traveling, the operability in controlling traveling of the haulage vehicle is remarkably improved.

### (Second Embodiment)

Hereinafter, as an example of embodiments of the present invention, an explanation will be given of the second embodiment in which the present invention is applied to a riding-type trolley to be used in a case of planting seedlings or harvesting crops by hand work, which is an example of traveling vehicles, based on the drawings. Note that, regarding the riding-type trolley exemplified in this second embodiment, the configuration of the traveling vehicle body is greatly different from that of the haulage vehicle exemplified in the above-described first embodiment, and the configurations of operation units, crawlers, etc., are the same or approximately the same. Therefore, in the second embodiment, explanations regarding the same configurations as those of the haulage vehicle of the first embodiment are omitted, and explanations will be given of the configurations of the traveling vehicle body, etc., having a different configuration from that of the haulage vehicle of the first embodiment.

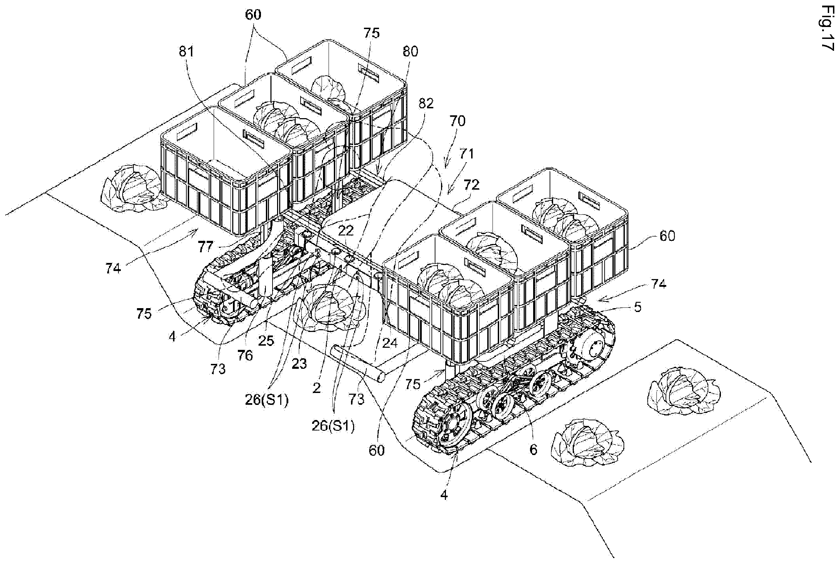

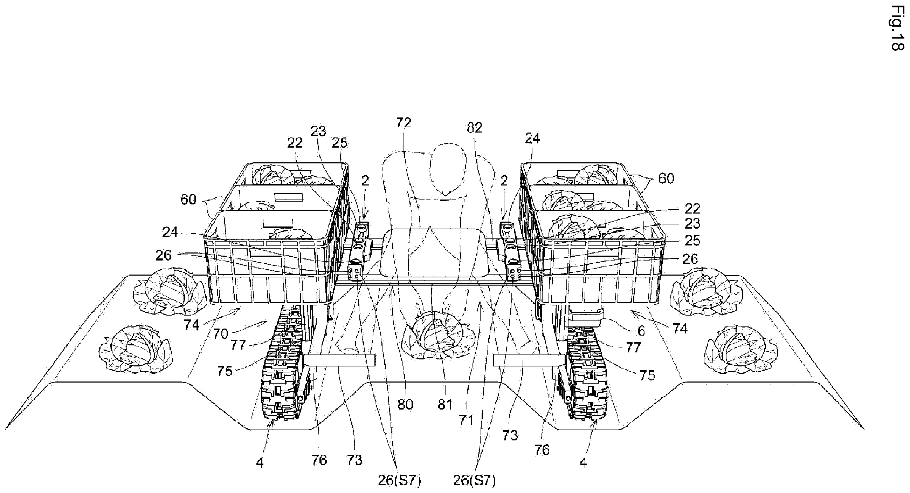

As illustrated in FIG. 17 to 18, the riding-type trolley exemplified in the present second embodiment is equipped with the rideable electric traveling vehicle body 70 and operation units 2 that enable a manual operation from the boarding section 71 of the traveling vehicle body 70. Note that, in FIG. 17, the first model of the riding-type trolley in which the single operation unit 2 is arranged on the front side of the boarding section 71 of the traveling vehicle body 70 is exemplified. Further, in FIG. 18, the second model of the riding-type trolley in which a pair of operation units 2 is arranged on the both left and right sides of the boarding section 71 of the traveling vehicle body 70 is exemplified.

The traveling vehicle body 70 includes the vehicle body frame 80 forming the frame thereof, the left and right crawlers 4 connected to the vehicle body frame 80, the first control unit 5 that controls traveling of the traveling vehicle body 70, and the battery 6 that supplies electric power to the first control unit 5, etc. The traveling vehicle body 70 is equipped with the boarding section 71 at the center in the left-right direction thereof. The boarding section 71 is equipped with the seat 72 and the left and right footrests 73. In the traveling vehicle body 70, the placing sections 74 on which the multiple containers 60 or the like are placed are formed on the left and right both sides of the boarding section 71.

The vehicle body frame 80 is formed in a rectangular shape elongated in the left-right direction of the vehicle body in a plan view with the front and rear main members 81 and 82 extending in the left-right direction of the vehicle body and multiple side members (not illustrated in the drawings) across the front and rear main members 81 and 83, which are bolt-connected.

The track frames 40 of the left and right crawlers 4 are connected to the front and rear main members 81 and 82 of the vehicle body frame 80 via the front and rear support columns 75 whose lengths can be adjusted in the up-down direction. Each support column 75 includes a pipe-shaped lower member 76 fixed to the track frame 40 and an upper member 77 fitted inside this lower member 76 so as to be retractable. Further, the upper members 77 are connected to the front and rear main members 81 and 82 so that the positions thereof can be adjusted in the left-right direction.

With the above-described configuration, regarding the traveling vehicle body 70, the heights of the boarding section 71 and the placing sections 74 relative to the ground can be changed by adjusting the length of each support column 75 in the up-down direction. Further, regarding the traveling vehicle body 70, the track (the distance between the centers of the left and right crawlers 4) can be changed by adjusting the positions of the upper members 77 connected to the front and rear main members 81 and 82 in the left-right direction.

As a result, it is possible to make this riding-type trolley highly versatile so that the heights of the boarding section 71 and the placing sections 74 of the traveling vehicle body 70 relative to the ground can be changed according to the height of ridges formed in an agricultural land, the height of crops, etc., and that the track of the traveling vehicle body 70 can be changed according to a ridge width, etc.

The traveling vehicle body 70 is equipped with the battery placing section 14 between the left-side crawler 4 and the left-side placing section 74. Further, the first control unit 5 is mounted on this battery placing section 14 together with the above-described battery 6.

As illustrated in FIG. 17, regarding the riding-type trolley of the first model, the fourth member 20D, which is the connection section of the operation unit 2, is connected to the central section of the front-side main member 81 in the left-right direction. The first switch 22, which is arranged at a position on the left of the center of this operation unit 2 in the left-right direction, functions as a forward-traveling switch (an example of the forward-traveling operation section) that inputs instruction information for forward straight traveling to the second control unit 21 as the instruction information for traveling. The second switch 23, which is arranged at a position on the right of the center of the operation unit 2 in the left-right direction, functions as a backward-traveling switch (an example of the backward-traveling operation section) that inputs instruction information for backward straight traveling to the second control unit 21 as the instruction information for traveling. The third switch 24, which is arrange on the left edge section of the operation unit 2, functions as a forward-traveling left-turn switch (an example of the left-turn operation section) that inputs instruction information for forward-traveling left turn to the second control unit 21 as the instruction information for traveling. The fourth switch 25, which is arrange on the right edge section of the operation unit 2, functions as a forward-traveling right-turn switch (an example of the right-turn operation section) that inputs instruction information for forward-traveling right turn to the second control unit 21 as the instruction information for traveling.

The first control unit 5 executes the first traveling control, based on the instruction information from the respective switches 22 to 25 of the operation unit 2. Note that, for the riding-type trolley of the first model, the functions of the respective switches 22 to 25 are set as described above, so that the first traveling control executed by the first control unit 5 includes the forward straight traveling control, the forward-traveling left-turn control, the forward-traveling right-turn control, and the backward straight traveling control.

In the first traveling control, the first control unit 5 transitions to the forward straight traveling control when the first switch 22 is operated so that the instruction information for forward straight traveling is input. Further, in this forward straight traveling control, the forward-traveling even-speed driving state, in which the left and right crawlers 4 are driven at an even speed in the forward-traveling direction, is maintained during the time from when the instruction information for forward straight traveling is input with the operation of the first switch 22 up to when the traveling vehicle body 70 travels straight to the front of the vehicle body by a predetermined distance according to the planting interval. Further, after the traveling vehicle body 70 travels straight by the predetermined distance, the left and right crawlers 4 are switched to the driving-stopped state, and the traveling vehicle body 1 is maintained in the traveling-stopped state. The first control unit 5 transitions to the backward straight traveling control when the second switch 23 is operated so that the instruction information for backward straight traveling is input. Further, in this backward straight traveling control, the backward-traveling even-speed driving state, in which the left and right crawlers 4 are driven at an even speed in the backward-traveling direction, is maintained during the time from when the instruction information for backward straight traveling is input with the operation of the second switch 23 up to when the traveling vehicle body 70 travels straight to the rear of the vehicle body by a predetermined distance according to the planting interval. Further, after the traveling vehicle body 70 travels straight by the predetermined distance, the left and right crawlers 4 are switched to the driving-stopped state, and the traveling vehicle body 1 is maintained in the traveling-stopped state. The first control unit 5 transitions to the forward-traveling left-turn control when the third switch 24 is operated so that the instruction information for forward-traveling left turn is input. Further, in this forward-traveling left-turn control, the left-pivot forward-traveling turn state, in which only the crawler 4 on the right side (the outer side of the turn) is driven in the forward-traveling direction while the driving of the crawler 4 on the left side (the inner side of the turn) is stopped, is maintained during the time from when the instruction information for forward-traveling left turn is input with the operation of the third switch 24 up to when the traveling vehicle body 70 makes a forward-traveling left turn at a predetermined angle. Further, after the traveling vehicle body 70 makes a forward-traveling left turn at the predetermined angle, the crawler 4 on the right side is switched to the driving-stopped state, and the traveling vehicle body 1 is maintained in the traveling-stopped state. The first control unit 5 transitions to the forward-traveling right-turn control when the fourth switch 25 is operated so that the instruction information for forward-traveling right turn is input. Further, in this forward-traveling right-turn control, the right-pivot forward-traveling turn state, in which only the crawler 4 on the left side (the outer side of the turn) is driven in the forward-traveling direction while the driving of the crawler 4 on the right side (the inner side of the turn) is stopped, is maintained during the time from when the instruction information for forward-traveling right turn is input with the operation of the fourth switch 25 up to when the traveling vehicle body 70 makes a forward-traveling right turn at a predetermined angle. Further, after the traveling vehicle body 70 makes a forward-traveling right turn at the predetermined angle, the crawler 4 on the left side is switched to the driving-stopped state, and the traveling vehicle body 1 is maintained in the traveling-stopped state.

That is, in the riding-type trolley of the first model, since the first control unit 5 executes the first traveling control for controlling traveling of the traveling vehicle body 1 as described above, it is possible for the user to move the riding-type trolley to a given position by operating any of the switches 22 to 25 of the operation unit 2.

In the riding-type trolley of the first model, the first control unit 5 executes the second traveling control, based on detection by each of the ultrasonic sensors 26. Note that, in the riding-type trolley of the first model, since the single operation unit 2 is arranged on the front side of the boarding section 71 of the traveling vehicle body 70 as described above, the second traveling control executed by the first control unit 5 includes the first to third collision avoidance controls of the first to the sixth collision avoidance controls, which are included in the second traveling control exemplified in the first embodiment. Further, for each of the ultrasonic sensors 26, out of the detection range thereof, a masking process is performed on a predetermined range in the vicinity of the vehicle body where a part of the traveling vehicle body 70, a part of the passenger, or the like may enter. Accordingly, each ultrasonic sensor 26 is prevented from erroneously detecting the footrests 73 of the traveling vehicle body 70, a foot of the passenger, or the like that has entered the detection range thereof as an obstacle.

With the above-described configuration, the riding-type trolley of the first model is prevented from colliding with an obstacle during execution of any of the forward straight traveling control, the forward-traveling left-turn control, and the forward-traveling right-turn control.

Further, with the above configuration, regarding the riding-type trolley of the first model, when the single operation unit 2 is connected to the traveling vehicle body 70, the second control unit 21, the four switches 22 to 25, and the eight ultrasonic sensors 26 installed on the operation unit 2 are in a state of being attached to the traveling vehicle body 70. Further, since the second control unit 21 is communicably connected to the first control unit 5 of the traveling vehicle body 70, instruction information for traveling that is input from each of the switches 22 to 25 and detection information from each of the ultrasonic sensors 26 can be transmitted to the first control unit 5 of the traveling vehicle body 70 via each second control unit 21. Accordingly, it is possible for the first control unit 5 to control traveling of the traveling vehicle body 70, based on instruction information for traveling from each of the switches 22 to 25 and detection information from each of the ultrasonic sensors 26.

That is, only by connecting the single operation unit 2 to the traveling vehicle body 70 so that the second control unit 21 is communicably connected to the first control unit 5, the riding-type trolley of the first model can be configured to be manually operable and capable of avoiding collisions, and ease of assemblage in obtaining this configuration can be improved.

Further, since ease of assemblage can be improved in such a way, the position of the operation unit 2 connected to the riding-type trolley can be easily changed according to the usage pattern of the riding-type trolley, the situation of the place for traveling, etc., and the arrangement of each of the switches 22 to 25 and the ultrasonic sensors 26 relative to the riding-type trolley can be integrally optimized. As a result, it is possible to improve the operability of each of the switches 22 to 25 and ensure the high detection performance of each of the ultrasonic sensors 26.

Moreover, in the riding-type trolley of the first model, since the respective switches 22 to 25 are installed on the upper edge section of the housing 20 of the operation unit 2, it is easy for the user seated in the seat 72 of the boarding section 71 to operate each of the switches 22 to 25, so that the operability of the riding-type trolley with each of the switches 22 to 25 is improved. Further, since the respective switches 22 to 25 are push-button switches having the large-diameter operation sections 22A to 25D, it is possible for the user to arbitrarily press any of the operation sections 22A to 25D of the switches 22 to 25, in order to transmit the instruction information for traveling corresponding to the switches 22 to 25 to the first control unit 5 via the second control unit 21, and, since the first control unit 5 controls traveling of the traveling vehicle body 70 based on the instruction information for traveling, the operability in controlling traveling of the riding-type trolley is remarkably improved.

Note that, regarding the riding-type trolley of the first model, the housing 20 of the operation unit 2 is not configured to also serve as a bumper that protects the traveling vehicle body 70. Therefore, it is also possible that dedicated bumpers that protect the traveling vehicle body 70 are installed on the front and rear both edge sections of the traveling vehicle body 70. Further, regarding the riding-type trolley of the first model, instead of performing the masking process for each of the ultrasonic sensors 26 of the operation unit 2, it is also possible to stop the functions of all the ultrasonic sensors 26.

As illustrated in FIG. 18, in the riding-type trolley of the second model, regarding the operation unit 2 on the left side of the vehicle body, the right edge section thereof functions as a connection section to be connected to the front-side main member 81, and the left edge section thereof functions as a connection section to be connected to the rear-side main member 81. Regarding the operation unit 2 on the right side of the vehicle body, the left edge section thereof functions as a connection section to be connected to the front-side main member 81, and the right edge section thereof functions as a connection section to be connected to the rear-side main member 81.

Regarding the riding-type trolley of the second model, the first switch 22 in the operation unit 2 on the left side of the vehicle body functions as a backward-traveling switch (an example of the backward-traveling operation section) that inputs instruction information for backward straight traveling to the second control unit 21 as the instruction information for traveling. The second switch 23 in the operation unit 2 on the left side of the vehicle body functions as a forward-traveling switch (an example of the forward-traveling operation section) that inputs instruction information for forward straight traveling to the second control unit 21 as the instruction information for traveling. The third switch 24 in the operation unit 2 on the left side of the vehicle body functions as a backward-traveling left-turn switch (an example of the left-turn operation section) that inputs instruction information for backward-traveling left turn to the second control unit 21 as the instruction information for traveling. The fourth switch 25 in the operation unit 2 on the left side of the vehicle body functions as a front-traveling left-turn switch (an example of the left-turn operation section) that inputs instruction information for backward-traveling right turn to the second control unit 21 as the instruction information for traveling. The first switch 22 in the operation unit 2 on the right side of the vehicle body functions as a forward-traveling switch (an example of the forward-traveling operation section) that inputs instruction information for forward straight traveling to the second control unit 21 as the instruction information for traveling. The second switch 23 in the operation unit 2 on the right side of the vehicle body functions as a backward-traveling switch (an example of the backward-traveling operation section) that inputs instruction information for backward straight traveling to the second control unit 21 as the instruction information for traveling. The third switch 24 in the operation unit 2 on the right side of the vehicle body functions as a backward-traveling right-turn switch (an example of the right-turn operation section) that inputs instruction information for backward-traveling right turn to the second control unit 21 as the instruction information for traveling. The fourth switch 25 in the operation unit 2 on the right side of the vehicle body functions as a forward-traveling right-turn switch (an example of the right-turn operation section) that inputs instruction information for forward-traveling right turn to the second control unit 21 as the instruction information for traveling.

The first control unit 5 executes the first traveling control, based on the instruction information from the respective switches 22 to 25 of the left and right operation units 2. The first traveling control includes forward straight traveling control, forward-traveling left-turn control, forward-traveling right-turn control, backward straight traveling control, backward-traveling right-turn control, and backward-traveling left-turn control.

In the first traveling control, the first control unit 5 transitions to the forward straight traveling control when the second switch 23 of the operation unit 2 on the left side of the vehicle body or the first switch 22 of the operation unit 2 on the right side of the vehicle body is operated so that the instruction information for forward straight traveling is input. Further, in this forward straight traveling control, the forward-traveling even-speed driving state, in which the left and right crawlers 4 are driven at an even speed in the forward-traveling direction, is maintained during the time from when the instruction information for forward straight traveling is input with the operation of the first switch 22 up to when the traveling vehicle body 70 travels straight to the front of the vehicle body by a predetermined distance according to the planting interval. Further, after the traveling vehicle body 70 travels straight by the predetermined distance, the left and right crawlers 4 are switched to the driving-stopped state, and the traveling vehicle body 1 is maintained in the traveling-stopped state. The first control unit 5 transitions to the backward straight traveling control when the first switch 22 of the operation unit 2 on the left side of the vehicle body or the second switch 23 of the operation unit 2 on the right side of the vehicle body is operated so that the instruction information for backward straight traveling is input. Further, in this backward straight traveling control, the backward-traveling even-speed driving state, in which the left and right crawlers 4 are driven at an even speed in the backward-traveling direction, is maintained during the time from when the instruction information for backward straight traveling is input with the operation of the second switch 23 up to when the traveling vehicle body 70 travels straight to the rear of the vehicle body by a predetermined distance according to the planting interval. Further, after the traveling vehicle body 70 travels straight by the predetermined distance, the left and right crawlers 4 are switched to the driving-stopped state, and the traveling vehicle body 1 is maintained in the traveling-stopped state. The first control unit 5 transitions to the forward-traveling left-turn control when the fourth switch 25 of the operation unit 2 on the left side of the vehicle body is operated so that the instruction information for forward-traveling left turn is input. Further, in this forward-traveling left-turn control, the left-pivot forward-traveling turn state, in which only the crawler 4 on the right side (the outer side of the turn) is driven in the forward-traveling direction while the driving of the crawler 4 on the left side (the inner side of the turn) is stopped, is maintained during the time from when the instruction information for forward-traveling left turn is input with the operation of the fourth switch 25 up to when the traveling vehicle body 70 makes a forward-traveling left turn at a predetermined angle. Further, after the traveling vehicle body 70 makes a forward-traveling left turn at the predetermined angle, the crawler 4 on the right side is switched to the driving-stopped state, and the traveling vehicle body 1 is maintained in the traveling-stopped state. The first control unit 5 transitions to the forward-traveling right-turn control when the third switch 24 of the operation unit 2 on the right side of the vehicle body is operated so that the instruction information for forward-traveling right turn is input. Further, in this forward-traveling right-turn control, the right-pivot forward-traveling turn state, in which only the crawler 4 on the left side (the outer side of the turn) is driven in the forward-traveling direction while the driving of the crawler 4 on the right side (the inner side of the turn) is stopped, is maintained during the time from when the instruction information for forward-traveling right turn is input with the operation of the third switch 24 up to when the traveling vehicle body 70 makes a forward-traveling right turn at a predetermined angle. Further, after the traveling vehicle body 70 makes a forward-traveling right turn at the predetermined angle, the crawler 4 on the left side is switched to the driving-stopped state, and the traveling vehicle body 1 is maintained in the traveling-stopped state. The first control unit 5 transitions to the backward-traveling left-turn control when the third switch 24 of the operation unit 2 on the left side of the vehicle body is operated so that the instruction information for backward-traveling left turn is input. Further, in this backward-traveling left-turn control, the left-pivot backward-traveling turn state, in which only the crawler 4 on the right side (the outer side of the turn) is driven in the backward-traveling direction while the driving of the crawler 4 on the left side (the inner side of the turn) is stopped, is maintained during the time from when the instruction information for backward-traveling left turn is input with the operation of the third switch 24 up to when the traveling vehicle body 70 makes a backward-traveling left turn at a predetermined angle. Further, after the traveling vehicle body 70 makes a backward-traveling left turn at the predetermined angle, the crawler 4 on the right side is switched to the driving-stopped state, and the traveling vehicle body 1 is maintained in the traveling-stopped state. The first control unit 5 transitions to the backward-traveling right-turn control when the fourth switch 25 of the operation unit 2 on the right side of the vehicle body is operated so that the instruction information for backward-traveling right turn is input. Further, in this backward-traveling right-turn control, the right-pivot backward-traveling turn state, in which only the crawler 4 on the left side (the outer side of the turn) is driven in the backward-traveling direction while the driving of the crawler 4 on the right side (the inner side of the turn) is stopped, is maintained during the time from when the instruction information for backward-traveling right turn is input with the operation of the fourth switch 25 up to when the traveling vehicle body 70 makes a backward-traveling right turn at a predetermined angle. Further, after the traveling vehicle body 70 makes a backward-traveling right turn at the predetermined angle, the crawler 4 on the left side is switched to the driving-stopped state, and the traveling vehicle body 1 is maintained in the traveling-stopped state.

That is, in the riding-type trolley of the second model, since the first control unit 5 executes the first traveling control for controlling traveling of the traveling vehicle body 1 as described above, it is possible for the user to move the riding-type trolley to a given position by operating any of the switches 22 to 25 of the left and right operation units 2.

As illustrated in FIG. 18, regarding the riding-type trolley of the second model, each of the left and right operation units 2 is additionally equipped with the four ultrasonic sensors (an example of the obstacle sensor) 26 attached in pairs arranged in the up-down direction on the side edge sections of the left and right caps 34 in addition to the above-described eight ultrasonic sensors (an example of the obstacle sensor) 26. Further, in the respective operation units 2, the four ultrasonic sensors 26 thereof arranged two each on the front edge sections of the vehicle body configure the seventh sensor unit S7 of which the detection ranges thereof are set in the forward straight traveling direction of the traveling vehicle body 1. Further, in the respective operation units 2, the four ultrasonic sensors 26 thereof arranged two each at the rear edge sections of the vehicle body configure the eighth sensor unit S8 (not illustrated in the drawings) of which the detection ranges thereof are set in the backward straight traveling direction of the traveling vehicle body 1.

In the riding-type trolley of the second model, regarding each of the left and right operation units 2, the functions of the respective ultrasonic sensors 26 configuring the first to sixth sensor units S1 to 6 are stopped, and the respective ultrasonic sensors 26 configuring the seventh sensor unit S7 and the eighth sensor unit S8 are set so as to function. The first control unit 5 executes the second traveling control, based on detection information from each of the ultrasonic sensors 26 of the seventh sensor unit S7 and the eighth sensor unit S8. Note that, in the riding-type trolley of the second model, since the pair of operation units 2 for which the functions of the respective ultrasonic sensors 26 are set as described above are arranged on the left and right both sides of the boarding section 71 of the traveling vehicle body 70, the second traveling control executed by the first control unit 5 includes the first collision avoidance control and the fourth collision avoidance control of the first to the sixth collision avoidance controls, which are included in the second traveling control exemplified in the first embodiment.

With the above-described configuration, the riding-type trolley of the second model is prevented from colliding with an obstacle during execution of the forward straight traveling control by use of the first collision avoidance control and from colliding with an obstacle during execution of the backward straight traveling control by use of the fourth collision avoidance control.

Further, with the above configuration, regarding the riding-type trolley of the second model, when the left and right operation units 2 are connected to the traveling vehicle body 70, the second control unit 21, the four switches 22 to 25, and the eight ultrasonic sensors 26 included in the respective operation units 2 are in a state of being attached to the traveling vehicle body 70. Further, since each second control unit 21 is communicably connected to the first control unit 5 of the traveling vehicle body 70, instruction information for traveling that is input from the respective switches 22 to 25 and detection information from the predetermined ultrasonic sensors 26 can be transmitted to the first control unit 5 of the traveling vehicle body 70 via each second control unit 21. Accordingly, it is possible for the first control unit 5 to control traveling of the traveling vehicle body 70, based on instruction information for traveling from the respective switches 22 to 25 and detection information from the predetermined ultrasonic sensors 26.

That is, only by connecting the left and right operation units 2 to the traveling vehicle body 70 so that the respective second control units 21 are communicably connected to the first control unit 5, the riding-type trolley of the second model can be configured to be manually operable and capable of avoiding collisions, and ease of assemblage in obtaining this configuration can be improved.

Further, since ease of assemblage can be improved in such a way, the positions of the relative operation units 2 connected to the riding-type trolley can be easily changed according to the usage pattern of the riding-type trolley, the situation of the place for traveling, etc., and the arrangement of each of the switches 22 to 25 and the ultrasonic sensors 26 relative to the riding-type trolley can be integrally optimized. As a result, it is possible to improve the operability of each of the switches 22 to 25 and ensure the high detection performance of each of the ultrasonic sensors 26.

Further, in the riding-type trolley of the second model, since the respective switches 22 to 25 are installed on the upper edge sections of the housings 20 of the respective operation units 2, it is easy for the user seated in the seat 72 of the boarding section 71 to operate each of the switches 22 to 25, so that the operability of the riding-type trolley with each of the switches 22 to 25 is improved. Further, since the respective switches 22 to 25 are push-button switches having the large-diameter operation sections 22A to 25D, it is possible for the user to arbitrarily press any of the operation sections 22A to 25D of the switches 22 to 25, in order to transmit the instruction information for traveling corresponding to the switches 22 to 25 to the first control unit 5 via the respective second control units 21, and, since the first control unit 5 controls traveling of the traveling vehicle body 70 based on the instruction information for traveling, the operability in controlling traveling of the riding-type trolley is remarkably improved.

Note that, regarding the riding-type trolley of the second model, the housings 20 of the respective operation units 2 are not configured to also serve as bumpers that protect the traveling vehicle body 70. Therefore, it is also possible that dedicated bumpers that protect the traveling vehicle body 70 are installed on the front and rear both edge sections of the traveling vehicle body 70.

### (Other Embodiments)

Explanations will be given of other embodiments of the present invention. Note that the configuration of each of the other embodiments explained below can, not only be applied independently, but also be applied in combination with the configuration of another embodiment.
(1) It is also possible that the traveling vehicle body 1 or 70 is equipped with, for example, left and right crawlers 4 in which the electric motors 41 are arranged and set so as to be positioned on the front side of the vehicle body and the idler wheels 43 are arranged and set so as to be positioned on the rear side of the vehicle body.
(2) It is also possible that the traveling vehicle body 1 or 70 is, for example, a hydraulic type in which the left and right crawlers 4 are independently driven by left and right hydraulic motors.
(3) It is also possible that, instead of the left and right crawlers 4, the traveling vehicle body 1 or 70 is equipped with, for example, an electric traveling device of a wheel model having left and right front wheels, for which the steering operation is performed with an electric motor or an electric cylinder, and left and right rear wheels, which are independently driven by left and right electric motors.
(4) It is also possible that, instead of the left and right crawlers 4, the traveling vehicle body 1 or 70 is configured with, for example, a hydraulic traveling device of a wheel model having left and right front wheels, for which the steering operation is performed with a hydraulic motor or a hydraulic cylinder, and left and right rear wheels, which are independently driven by left and right hydraulic motors.
(5) It is also possible that the operation unit 2 is not equipped with the second control unit 21, for example, and the manual operation sections (for example, the first to fourth switches 22 to 25) and the obstacle sensors 26 installed on the housing 20 thereof are communicably connected to the first control unit 5 installed on the traveling vehicle body 1 or 70.
(6) It is also possible that, for example, the second control unit 21 of the operation unit 2 is connected to the first control unit 5 via a wireless LAN (Local Area Network), such as Wi-Fi (registered trademark), or short-range wireless communication, such as Bluetooth (registered trademark), so as to be capable of performing wireless communication.
(7) It is also possible that, for example, the multiple switches 22 to 25 integrally mounted on the housing 20 of the operation unit 2 as the manual operation sections employ proximity switches, instead of push-button switches.
(8) It is also possible that, for example, instead of the multiple switches 22 to 25 integrally mounted on the housing 20 of the operation unit 2 as the manual operation sections, a single joystick is integrally mounted.
(9) It is also possible that the housing 20 of the operation unit 2 is configured with, for example, multiple connection sections 20D that enable adjustment of the attachment position and attachment posture of the operation unit 2 relative to the traveling vehicle body 1 or 70.
(10) It is also possible that each of the switches 22 to 25 installed on the housing 20 of the operation unit 2 as the manual operation sections is, for example, an illumination type having a notification light such as an LED that emits light when an operation directed to them is properly performed in order to notify the user that the operation is received.
(11) It is also possible that, for example, a notification device such as a buzzer or sound generating device that is activated when an operation directed to the manual operation section is properly performed in order to notify the user that the operation is received is integrally mounted on the housing 20 of the operation unit 2 in addition to the second control unit 21, the manual operation sections (for example, the first to fourth switches 22 to 25), and the obstacle sensors 26.
(12) It is also possible that, for example, a dedicated battery that supplies power to the second control unit 21, etc., is integrally mounted on the housing 20 of the operation unit 2 in addition to the second control unit 21, the manual operation sections (for example, the first to fourth switches 22 to 25), and the obstacle sensors 26.
(13) It is also possible that, for example, an operation section that enables changing of settings of the predetermined period of time, predetermined distance, or predetermined angle for driving either or both of the left and right crawlers 4 for the predetermined period of time, by the predetermined distance, or at the predetermined angle in the driving state corresponding to an operation of any of the switches 22 to 25 is integrally mounted on the housing 20 of the operation unit 2 in addition to the first to fourth switches 22 to 25 described above as the manual operation sections.
(14) It is also possible that, for example, in the forward straight traveling control and the backward straight traveling control for the haulage vehicle exemplified in the first embodiment, the first control unit 5 is configured to maintain the forward-traveling even-speed driving state, in which the left and right crawlers 4 are driven at an even speed in the forward-traveling direction, or the backward-traveling even-speed driving state, in which the left and right crawlers 4 are driven at an even speed in the backward-traveling direction, during the time from when the instruction information for forward straight traveling or backward straight traveling is input with an operation of the first switch 22 or the second switch 23 of each operation unit 2 up to when the traveling vehicle body 70 travels straight to the front of the vehicle body or the rear of the vehicle body by a predetermined distance. Further, it is also possible that, for example, in the forward-traveling left-turn control, the forward-traveling right-turn control, the backward-traveling left-turn control, and the backward-traveling right-turn control for the haulage vehicle exemplified in the first embodiment, the first control unit 5 is configured to maintain the uneven-speed driving state for turning, in which the left and right crawlers 4 are driven at uneven speeds in the forward-traveling direction or the backward-traveling direction, so that the driving speed of the crawler 4 on the inner side of the turn becomes slower than the driving speed of the crawler 4 on the outer side of the turn, during the time from when the instruction information for any of the forward-traveling left turn, the forward-traveling right turn, the backward-traveling left turn, and the backward-traveling right turn is input with an operation of the third switch 24 or the fourth switch 25 of each operation unit 2 up to when the traveling vehicle body 70 makes a turn at a predetermined angle in the direction corresponding to the instruction information. Moreover, it is also possible that, for example, in the forward-traveling left-turn control, the forward-traveling right-turn control, the backward-traveling left-turn control, and the backward-traveling right-turn control for the haulage vehicle exemplified in the first embodiment, the first control unit 5 is configured to maintain the left and right crawlers 4 being in a pivot turning state, in which only the crawler 4 on the outer side of the turn is driven in the forward-traveling direction or the backward-traveling direction in a state where the driving of the crawler 4 on the inner side of the turn is stopped, instead of an uneven-speed driving state for turning.
(15) It is also possible that, for example, in the forward straight traveling control and the backward straight traveling control for the riding-type trolley exemplified in the second embodiment with reference to FIG. 17, the first control unit 5 is configured to maintain the forward-traveling even-speed driving state, in which the left and right crawlers 4 are driven at an even speed in the forward-traveling direction, or the backward-traveling even-speed driving state, in which the left and right crawlers 4 are driven at an even speed in the backward-traveling direction, during the time from when the instruction information for forward straight traveling or backward straight traveling is input with an operation of the first switch 22 or the second switch 23 of the operation unit 2 up to when the traveling vehicle body 70 travels straight to the front of the vehicle body or the rear of the vehicle body for a predetermined period of time. Further, it is also possible that, for example, in the forward-traveling left-turn control and the forward-traveling right-turn control for the haulage vehicle exemplified in the second embodiment with reference to FIG. 17, the first control unit 5 is configured to maintain a pivot front-traveling turning state, in which only the crawler 4 on the outer side of the turn is driven in the forward-traveling direction in a state where the driving of the crawler 4 on the inner side of the turn is stopped, during the time from when the instruction information for either of the forward-traveling left turn and the forward-traveling right turn is input with an operation of the third switch 24 or the fourth switch 25 of the operation unit 2 up to when the traveling vehicle body 70 makes a turn for a predetermined period of time in the direction corresponding to the instruction information. Moreover, it is also possible that, for example, in the forward-traveling left-turn control and the forward-traveling right-turn control for the riding-type trolley exemplified in the second embodiment with reference to FIG. 17, the first control unit 5 is configured to maintain the left and right crawlers 4 being in a left or right uneven-speed driving state for forward-traveling turning to the left or right, in which the left and right crawlers 4 are driven at uneven speeds in the forward-traveling direction so that the driving speed of the crawler 4 on the inner side of the turn becomes slower than the driving speed of the crawler 4 on the outer side of the turn, instead of a left or right pivot forward-traveling turning state.
(16) It is also possible that, for example, in the forward straight traveling control and the backward straight traveling control for the riding-type trolley exemplified in the second embodiment with reference to FIG. 18, the first control unit 5 is configured to maintain the forward-traveling even-speed driving state, in which the left and right crawlers 4 are driven at an even speed in the forward-traveling direction, or the backward-traveling even-speed driving state, in which the left and right crawlers 4 are driven at an even speed in the backward-traveling direction, during the time from when the instruction information for forward straight traveling or backward straight traveling is input with an operation of the first switch 22 or the second switch 23 of each operation unit 2 up to when the traveling vehicle body 70 travels straight to the front of the vehicle body or the rear of the vehicle body for a predetermined period of time. Further, it is also possible that, for example, in the forward-traveling left-turn control, the forward-traveling right-turn control, the backward-traveling left-turn control, and the backward-traveling right-turn control for the haulage vehicle exemplified in the second embodiment with reference to FIG. 18, the first control unit 5 is configured to maintain a pivot turning state, in which only the crawler 4 on the outer side of the turn is driven in the forward-traveling direction or the backward-traveling direction in a state where the driving of the crawler 4 on the inner side of the turn is stopped, during the time from when the instruction information for any of the forward-traveling left turn, the forward-traveling right turn, the backward-traveling left turn, and the backward-traveling right turn is input with an operation of the third switch 24 or the fourth switch 25 of each operation unit 2 up to when the traveling vehicle body 70 makes a turn for a predetermined period of time in the direction corresponding to the instruction information. Moreover, it is also possible that, for example, in the forward-traveling left-turn control, the forward-traveling right-turn control, the backward-traveling left-turn control, and the backward-traveling right-turn control for the riding-type trolley exemplified in the second embodiment with reference to FIG. 18, the first control unit 5 is configured to maintain the left and right crawlers 4 being in an uneven-speed driving state for turning, in which the left and right crawlers 4 are driven at uneven speeds in the forward-traveling direction or the backward-traveling direction so that the driving speed of the crawler 4 on the inner side of the turn becomes slower than the driving speed of the crawler 4 on the outer side of the turn, instead of a pivot turning state.
(17) It is also possible that, for example, when a tap operation is performed on any of the switches 22 to 25 of the operation unit 2, the first control unit 5 is configured to drive either or both of the left and right crawlers 4 only for a predetermined period of time, by a predetermined distance, or at a predetermined angle in the driving state corresponding to the operation, and, when a long-press operation is performed on any of the switches 22 to 25, the first control unit 5 is configured to drive either or both of the left and right crawlers 4 in the driving state corresponding to the operation during the time where the operation is continued.
(18) It is also possible that, for example, when a tap operation is performed on any of the switches 22 to 25 of the operation unit 2, the first control unit 5 is configured to drive either or both of the left and right crawlers 4 at a predetermined speed only for a predetermined period of time, by a predetermined distance, or at a predetermined angle in the driving state corresponding to the operation, and, when tap operations are simultaneously performed on the first switch 22 and the third switch 24, the first control unit 5 is configured to accelerate the driving speed of the crawlers 4 being driven by a predetermined speed, and, when tap operations are simultaneously performed on the second switch 23 and the fourth switch 25, the first control unit 5 is configured to decelerate the driving speed of the crawlers 4 being driven by a predetermined speed.
(19) Regarding the operation unit 2 and the first control unit 5, it is also possible that the operation unit 2 is configured with, for example, the fifth switch for stopping traveling in addition to the first to fourth switches 22 to 25 described above as the manual operation sections, so that, when a tap operation is performed on any of the first to fourth switches 22 to 25, the first control unit 5 drives either or both of the left and right crawlers 4 in the driving state corresponding to the operation, and, when a tap operation is performed on the fifth switch, the first control unit 5 stops the driving of either or both of the crawlers 4 being driven.
(20) Regarding the operation unit 2 and the first control unit 5, it is also possible that the operation unit 2 is configured with, for example, the fifth switch for selecting a turning mode in addition to the first to fourth switches 22 to 25 described above as the manual operation sections, so that, when an operation is performed on the third switch 24 or fourth switch 25 for turning out of the first to fourth switches 22 to 25, the first control unit 5 drives either or both of the left and right crawlers 4 according to the turning mode selected with the fifth switch. Note that it is conceivable that the turning mode includes a gentle turn mode in which the left and right crawlers 4 are driven at uneven speeds in the same direction, a pivot turn mode in which one of the left and right crawlers 4 is driven in a state where the driving of the other crawler 4 is stopped, a spin turn mode in which the left and right crawlers 4 are driven at an even speed in the forward-traveling direction and the backward-traveling direction, etc.
(21) It is also possible that the operation unit 2 and the first control unit 5 are configured as follows. For example, as the manual operation sections, the operation unit 2 is equipped with an operation section for starting traveling which outputs instruction information for starting traveling, an operation section for stopping which outputs instruction information for stopping traveling, an operation section for turning left which outputs instruction information for turning left, an operation section for turning right which outputs instruction information for turning right, an operation section for acceleration which outputs instruction information for acceleration, an operation section for deceleration which outputs instruction information for deceleration. For example, the first control unit 5 causes the traveling vehicle body 1 to travel straight forward at a predetermined speed (for example, ultra-low speed) in a case where the operation section for starting traveling is operated. The first control unit 5 stops the traveling vehicle body 1 in a case where the operation section for stopping is operated. The first control unit 5 causes the traveling vehicle body 1 to turn left during the time where the operation section for turning left is being operated. The first control unit 5 causes the traveling vehicle body 1 to turn right during the time where the operation section for turning right is being operated. The first control unit 5 increases the vehicle speed by a predetermined amount in a case where the operation section for acceleration is operated. The first control unit 5 decreases the vehicle speed by a predetermined amount in a case where the operation section for deceleration is operated. According to this configuration, it is possible for the user to cause the traveling vehicle body 1 to travel straight forward at a predetermined speed (for example, ultra-low speed) by operating the operation section for starting traveling. It is possible for the user to stop the traveling vehicle body 1 by operating the operation section for stopping. It is possible for the user to cause the traveling vehicle body 1 to turn left or turn right during the time where the operation section for turning left or the operation section for turning right is being operated. It is possible for the user to increase or decrease the vehicle speed of the traveling vehicle body 1 on a per predetermined amount basis by operation the operation section for acceleration or the operation section for deceleration. That is, it is possible for the user to move the traveling vehicle body 1 to a given position at a given speed by operating any of the manual operation sections. Further, in a case where the traveling vehicle body 1 deviates from a predetermined traveling route, the course can be corrected so that the traveling vehicle body 1 returns to the predetermined travel route by operating the operation section for turning left and the operation section for turning right. Note that, in this configuration, it is also possible that a single manual operation section serves as the operation section for starting traveling and the operation section for stopping. Further, it is preferable that a manual operation section that outputs instruction information for switching forward and backward traveling is additionally mounted on the operation unit 2 so that the forward and backward traveling of the traveling vehicle body 1 can be switched.
(22) As he obstacle sensors 26 integrally mounted on the operation unit 2, it is also possible that, for example, infrared distance sensors that measure the distances to obstacles by use of infrared rays, LiDAR sensors that measure the distances to obstacles by use of lasers, or the like, are employed, instead of the ultrasonic sensors.
(23) In the second traveling control, it is also possible that, for example, when the obstacle sensor 26 detects an obstacle, the first control unit 5 is configured to perform the distance-measuring process for obtaining the distance to the obstacle based on the detection information from the obstacle sensor 26, configured to perform a distance determination process for determining whether or not the obtained distance to the obstacle is longer than a set distance, so that, during the time where the measured distance to the obstacle is longer than the set distance, the first control unit 5 is configured to perform a deceleration driving process for deceleration driving, in which the driving speed for driving either or both of the left and right crawlers 4 in the driving state corresponding to the operation of any of the switches 22 to 25 is decelerated to a speed that is slower than the driving speed of the time where the obstacle sensors 26 do not detect obstacles, and configured to perform the above-described driving-stop process when the measured distance to the obstacle is equal to or shorter than the set distance.
(24) Regarding the first control unit 5 and the second control unit 21, it is also possible that, in the first traveling control, the second control unit 21 is configured to perform a determination process for determining whether or not instruction information from a manual operation section (for example, each of the switches 22 to 25) of the operation unit 2 is input and, when the second control unit 21 determines that instruction information is input from a manual operation section, the instruction information is sent to the first control unit 5, so that the first control unit 5 controls traveling of the traveling vehicle body 1 by performing the above-described forward straight traveling control, etc., based on the instruction information.
(25) Regarding the first control unit 5 and the second control unit 21, it is also possible that, in the second traveling control, the second control unit 21 is configured to perform a determination process for determining whether or not an obstacle is detected by the obstacle sensor (for example, each of the ultrasonic sensors) 26 of the operation unit 2 and, when the second control unit 21 determines that an obstacle is detected by the obstacle sensor 26 in the determination process, the detection information is sent to the first control unit 5, so that the first control unit 5 controls traveling of the traveling vehicle body 1 by performing the above-described first collision avoidance control, etc., based on the detection information.

### INDUSTRIAL APPLICABILITY

It is possible to apply the present invention to a traveling vehicle that can be utilized for transporting goods, planting seedlings or harvesting crops by hand work, etc.

### DESCRIPTION OF REFERENCE NUMERALS

- 1: Traveling vehicle body (first embodiment)
- 2: Operation unit
- 5: First control unit
- 20: Housing
- 20D: Connection section
- 21: Second control unit
- 22: Manual operation section (first switch)
- 23: Manual operation section (second switch)
- 24: Manual operation section (third switch)
- 25: Manual operation section (fourth switch)
- 26: Obstacle sensor
- 70: Traveling vehicle body (second embodiment)

## Claims

1. A traveling vehicle comprising:
a traveling vehicle body on which a first control unit that controls traveling is mounted; and
an operation unit that enables a manual operation of the traveling vehicle body,
wherein the operation unit includes a housing having a connection section to be detachably connected to the traveling vehicle body, and
wherein the housing is integrally equipped with:
a manual operation section which enables instruction information for traveling to be input to the first control unit; and
an obstacle sensor which detects an obstacle existing in a traveling direction of a vehicle body for transmission to the first control unit.

2. The traveling vehicle according to claim 1,
wherein the housing is integrally equipped with a second control unit that is input with the instruction information for traveling from the manual operation section and detection information from the obstacle sensor and that is communicably connected to first control unit.

3. The traveling vehicle according to claim 1 or 2,
wherein the housing also serves as a bumper that protects the traveling vehicle body.

4. The traveling vehicle according to any one of claims 1 to 3,
wherein the manual operation section is mounted on an upper edge section of the housing.

5. The traveling vehicle according to any one of claims 1 to 4,
wherein a plurality of push-button switches are mounted as the manual operation section.

6. The traveling vehicle according to any one of claims 1 to 5,
wherein, the housing as the manual operation section, is integrally equipped with:
an operation section for forward traveling which outputs instruction information for forward straight traveling;
an operation section for backward traveling which outputs instruction information for backward straight traveling;
an operation section for turning left which outputs instruction information for turning left; and
an operation section for turning right which outputs instruction information for turning right,
wherein, if the instruction information for traveling is input from any of the manual operation sections, the first control unit travels the traveling vehicle body, based on the input instruction information for traveling, during a time from when the instruction information for traveling is input to when a predetermined period of time elapses, and stops the traveling vehicle body after the predetermined period of time elapses.

7. The traveling vehicle according to any one of claims 1 to 5,
wherein, the housing as the manual operation section, is integrally equipped with:
an operation section for starting traveling which outputs instruction information for starting traveling;
an operation section for stopping which outputs instruction information for stopping traveling;
an operation section for turning left which outputs instruction information for turning left;
an operation section for turning right which outputs instruction information for turning right;
an operation section for acceleration which outputs instruction information for acceleration; and
an operation section for deceleration, which outputs instruction information for deceleration,
wherein, if the instruction information for traveling is input from any of the manual operation sections, the first control unit controls traveling of the traveling vehicle body, based on the input instruction information for traveling.
